# EUROPEAN PATENT APPLICATION

(11) **EP 4 373 172 A1**
(43) Date of publication of application: **22.05.2024**
(21) Application number: 22207493.2
(22) Date of filing: 15.11.2022
(51) Int. Cl.: H04W 52/36, H04W 52/42, H04W 52/14, H04W 52/28, H04B 17/10, H04B 7/06, H01Q 3/24, H04B 1/3827, H04W 52/52

(54) **METHODS AND APPARATUS TO APPLY BACK OFF OPERATION INDIVIDUALLY TO EACH OF THE TRANSMISSION PATHS**

(71) Applicant: INTEL Corporation, Santa Clara, CA 95054 (US)
(72) Inventor: SREENIVASAREDDY, Madhukiran, 560103 Bangalore (IN); HEGDE, Mythili, 560078 Bangalore (IN); AAGIRU, Vamshi Krishna, 560048 Bangalore (IN); R, Rahul, 683102 Aluva (IN); PRABHA, Abhijith, 686667 Piravom (IN)
(74) Representative: Viering, Jentschura & Partner mbB Patent- und Rechtsanwälte

(57) **Abstract**

A radio frequency (RF) transmitter may include: an interface configured to receive a signal representative of a detected presence by a proximity sensor configured to detect a presence in a vicinity of a plurality of antennas, a plurality of transmission paths, each transmission path is configured to provide an RF signal to a respective antenna of the plurality of antennas; a processing circuitry configured to: detect, responsive to a received signal representative of the detected presence, a change at a signal power reflected at each transmission path, and adjust transmit power of each antenna of at least one of the antennas based on a detected change at the respective transmission path.

## Description

### Technical Field

This disclosure generally relates to methods and devices for applying a power back-off operation for transmission of radio communication signals.

### Background

With respect to many radio communication technologies, such as Fourth Generation (LTE) and Fifth Generation (5G) New Radio (NR), Wireless Local Area Network (WLAN), various limitations and constraints have been defined in order to limit exposure of radio frequency (RF) electromagnetic fields to humans. A commonly known measure, specific absorption rate (SAR) may be used to define the amount of RF energy absorbed by the human body. SAR measure may depend on power of RF signals transmitted by the transmitter, the body part that is in the vicinity of the antenna transmitting the RF signals, in particular in the vicinity of a transmission direction to which the antenna transmits the RF signals, and the distance between the antenna and the body part.

With the employment of multiple input multiple output (MIMO) and beamforming methods in radio communication technologies, communication operations may include transmitting multiple RF signals via multiple antennas, in which each RF signal may have a narrow direction resulting in higher RF power levels in the transmission direction. In order to operate within SAR limits defined by various regulatory entities in various jurisdictions, communication devices may implement power back-off operations in which transmission power of RF signals are limited when a human body part is present within the vicinity of antennas.

### Brief Description of the Drawings

In the drawings, like reference characters generally refer to the same parts throughout the different views. The drawings are not necessarily to scale, emphasis instead generally being placed upon illustrating the principles of the disclosure. In the following description, various aspects of the disclosure are described with reference to the following drawings, in which:
FIG. 1 shows an exemplary radio communication network;
FIG. 2 shows an exemplary internal configuration of a communication device;
FIG. 3 shows an exemplary illustration of various communication elements of an RF transceiver;
FIG. 4 shows an exemplary illustration of an RF-chain;
FIG. 5 shows an example of an apparatus for a radio communication device;
FIG. 6 shows an example of a controller of an RF transmitter;
FIG. 7 shows an example of a procedure;
FIG. 8 shows an example of an apparatus;
FIG. 9 shows an example of a method;
FIG. 10 shows an example of an apparatus for a radio communication device;
FIG. 11 shows an example of an apparatus for a radio communication device;
FIG. 12 shows an exemplary signaling procedure between sensing elements, a sensor circuit, a controller, and an RF transceiver;
FIG. 13 shows an example of a method.

### Description

The following detailed description ' to the accompanying drawings that show, by way of illustration, exemplary details and aspects in which aspects of the present disclosure may be practiced.

Radio communication devices employ various mechanisms to reduce RF radiation and operate in accordance with SAR constraints defined by regulatory entities. One of the mechanisms may include control of communication operations based on a presence of a human body part (i.e. presence of human) within a designated proximity to antennas. A radio communication device may, reduce transmission power of radio communication signals to be transmitted by antennas, or may postpone transmission of radio communication signals for future (e.g. when the human body part is not present in the transmission directions, or for a predefined time period), which will be referred to as a back-off operation (BO). The reduction of transmission power may be referred to as power back-off (PBO), and postponement of communication may be referred to as a time back-off (TBO) in this disclosure.

There are various mechanisms employed for detection and/or triggering of a back-off operation. Some examples include a time averaged SAR, in which a radio communication device may aggregate transmission (TX) power over a defined time period and applying a BO based on the aggregated TX power and predefined limitations, such as maximum aggregated TX power defined by a particular regulatory entity. In some examples, the associated TX power to be aggregated may be assumed as the maximum TX power to derive the aggregated TX power according to period of time in which the radio communication device transmits RF signals.

In order to implement a BO operation, RF circuits (e.g. RF transmitters) of a radio communication device may be configured to operate in a BO operation mode in which TX power of radio communication signals delivered to antennas are reduced (PBO) or in which transmission of radio communication signals are postponed (TPO). The RF circuits may include a designated interface to receive information to trigger the BO operation from main processor (e.g. a system on chip (SoC)) of the radio communication device. Based on detection of human presence, RF circuits may receive the information from the designated interface. The RF circuits may be configured to trigger the BO operation in response to the received information, which the BO operation may include reducing TX power of all antennas.

In some cases when an RF circuit is configured to transmit RF signals via multiple antennas, in particular, under consideration of increased antenna sizes to communicate using high frequency RF signals (e.g. at GHz-level), a human body part may not be present in transmission direction of all of the antennas. In such cases, and in accordance with various aspects of this disclosure, it may be desirable to control Tx power of the antennas individually, or independently, or at least in predefined subsets, such that the BO operation is applied only for one or some of the antennas based on human body part presence for the antennas respectively.

Furthermore, the designated interface through which an RF circuit may receive information to trigger a BO operation may have certain constraints. For example, in M.2 specification, which is a specification for internally mounted expansion cards, a card including the RF circuit may include a designated interface including a pin (e.g. dynamic power reduction pin), and the RF circuit may be configured to apply a BO based on information (e.g. analog signals, digital signals, such as an interrupt signal) received from the pin. Accordingly, it may be desirable to configure the RF circuits within these limitations to control Tx power of the antennas, such that the RF circuit may apply a BO for each antenna, or a group of antennas, individually or independently.

Furthermore, the main processor of the radio communication device may operate in a low power mode during operations including transmission of radio communication signals. Alternatively, or additionally, the main processor may be unresponsive for various reasons, or the operating system (OS) may be in an unresponsive state, or may have crashed. It may be desirable to operate and maintain BO to ensure that SAR limitations designated for the radio communication device is applied in those cases and provide prevention of long exposure of RF signals to a human body part, in which the main processor is unable to provide information to trigger the BO operation.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in a plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and methods of this disclosure accompanied by vector and/or matrix notation are not limited to being implemented solely using vectors and/or matrices, and the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context of this disclosure, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

The apparatuses and methods of this disclosure may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth^{®}, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("12V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 790-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5-28.35 GHz, 29.1-29.25 GHz, 31-31.3 GHz, 37-38.6 GHz, 38.6-40 GHz, 42-42.5 GHz, 57-64 GHz, 64-71 GHz, 71-76 GHz, 81-86 GHz and 92-94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz-71 GHz band, any band between 65.88 GHz and 71 GHz, bands currently allocated to automotive radar applications such as 76-81 GHz, and future bands including 94-300 GHz and above. Furthermore, the apparatuses and methods described herein can also employ radio communication technologies on a secondary basis on bands such as the TV White Space bands (typically below 790 MHz) where e.g. the 400 MHz and 700 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

Unless explicitly specified, the term "transmit" encompasses both direct (point-to-point) and indirect transmission (via one or more intermediary points). Similarly, the term "receive" encompasses both direct and indirect reception. Furthermore, the terms "transmit", "receive", "communicate", and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception are handled by radio-layer components such as RF transceivers and antennas, and the logical transmission and reception over the software-level connection is performed by the processors or controllers. The term "communicate" encompasses one or both transmitting and receiving, i.e. unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations. The term "channel state information" is used herein to refer generally to the wireless channel for wireless transmission between one or more transmitting antennas and one or more receiving antennas and may take into account any factors that affect a wireless transmission such as, but not limited to, path loss, interference, and/or blockage.

An antenna port may be understood as a logical concept representing a specific channel or associated with a specific channel. An antenna port may be understood as a logical structure associated with a respective channel (e.g., a respective channel between a user equipment and a base station). Illustratively, symbols (e.g., OFDM symbols) transmitted over an antenna port (e.g., over a first channel) may be subject to different propagation conditions with respect to other symbols transmitted over another antenna port (e.g., over a second channel).

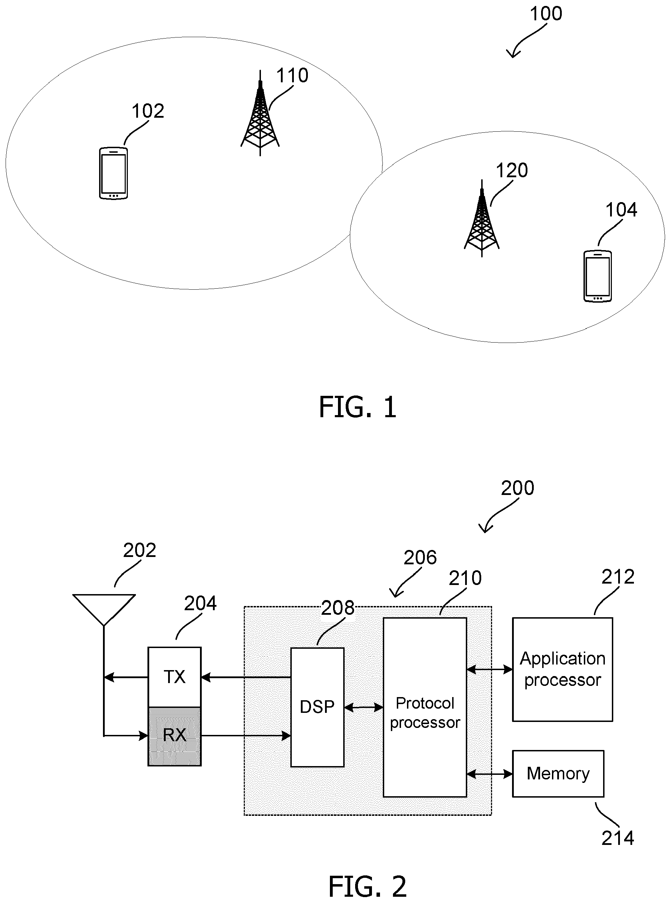

FIGs. 1 and 2 depict a general network and device architecture for wireless communications. In particular, FIG. 1 shows exemplary radio communication network 100 according to some aspects, which may include terminal devices 102 and 104 and network access nodes 110 and 120. Radio communication network 100 may communicate with terminal devices 102 and 104 via network access nodes 110 and 120 over a radio access network. Although certain examples described herein may refer to a particular radio access network context (e.g., LTE, UMTS, GSM, other 3rd Generation Partnership Project (3GPP) networks, WLAN/WiFi, Bluetooth, 5G NR, mmWave, etc.), these examples are demonstrative and may therefore be readily applied to any other type or configuration of radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network 100.

FIG. 2 shows an exemplary internal configuration of a communication device according to various aspects provided in this disclosure. The communication device may include various aspects of network access nodes 110, 120 or various aspects of a terminal device 102 as well. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., In-Phase/Quadrature (IQ) samples) to provide to baseband modem 206. RF transceiver 204 may include analog and digital reception components including amplifiers (e.g., Low Noise Amplifiers (LNAs)), filters, RF demodulators (e.g., RF IQ demodulators)), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., Power Amplifiers (PAs), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects baseband modem 206 may control the radio transmission and reception of RF transceiver 204, including specifying the transmit and receive radio frequencies for operation of RF transceiver 204.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or FPGAs), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., ASICs, FPGAs, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include Fast Fourier Transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., Layer 1/PHY) of the radio communication technologies, while protocol controller 210 may be responsible for upper-layer protocol stack functions (e.g., Data Link Layer/Layer 2 and/or Network Layer/Layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the Access Stratum and Non-Access Stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include Data Link Layer/Layer 2 and Network Layer/Layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU, and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select \ available network access nodes in order to maintain a strong radio access connection with the radio access network of radio communication network 100. For example, terminal device 102 may establish a radio access connection with network access node 110 while terminal device 104 may establish a radio access connection with network access node 112. In the event that the current radio access connection degrades, terminal devices 102 or 104 may seek a new radio access connection with another network access node of radio communication network 100; for example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112. Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

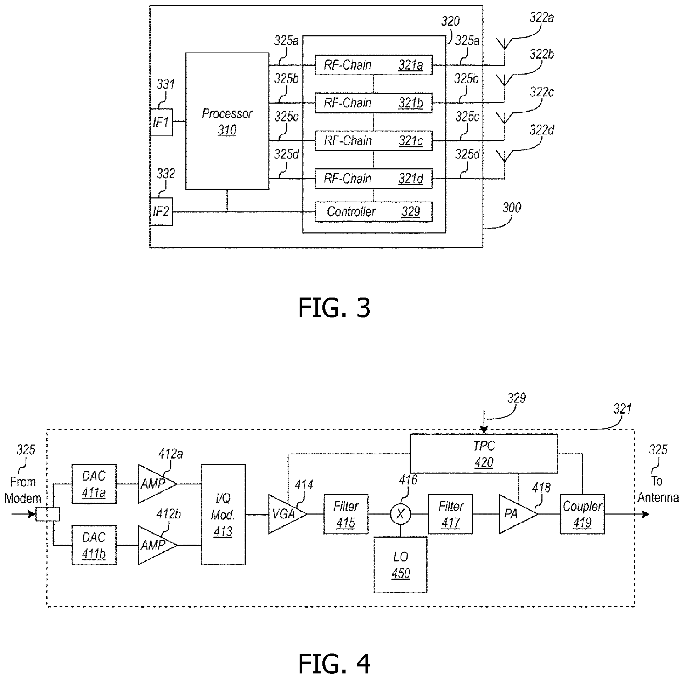

FIG. 3 shows an exemplary illustration of various communication elements of an RF transceiver. The RF transceiver 300 may include a processing circuitry 310 (e.g. the baseband modem 206) that may direct and manage communication operations of the RF transceiver 300 according to one or more radio communication protocols, and may execute control over antennas 322a-d via an RF circuit 320. The RF circuit 320 may include RF-chains 321a-d to process communication signals of antennas 322a-d respectively. The RF transceiver 300 may include a plurality of antennas 322a-d, or may include an antenna interface couplable to the plurality of antennas 322a-d. The RF transceiver 300 may transmit and receive radio communication signals with the plurality of antennas 322a-d. The RF transceiver 300 may act as an RF transmitter to transmit radio communication signals and it may also act as an RF receiver to receive radio communication signals.

The processing circuitry 310 may include, or may be implemented, partially or entirely, by circuit and/or logic, e.g., a processor including circuit and/or logic, a memory circuit and/or a logic, which may be configured to manage radio communication operations. The processing circuitry 310 may be configured to communicate with a main processor (e.g. a host processor, a central processing unit (CPU), a system on chip (SoC)) of a communication device including the RF transceiver 300 via a first interface 331 that is coupled to the main processor. The processing circuitry 310 may also access to a main memory of the respective communication device via the first interface 331.

The processing circuitry 310 may include a digital signal processor (e.g. the digital signal processor 208). The digital signal processor 208 may be configured to perform one or more of error detection, forward error correction encoding/decoding, channel coding, and interleaving, channel modulation/demodulation, physical channel mapping, radio measurement and search, frequency and time synchronization, antenna diversity processing, power control, and weighting, rate matching/de-matching, retransmission processing, interference cancelation, and any other physical layer processing functions.

The processing circuitry 310 may include a modem configured to process baseband signals received from/sent to the antennas 322a-d via a plurality of communication paths 325a-d including a plurality of RF-chains 321a-d. Accordingly, the processing circuitry 310 may include Media-Access Control (MAC) circuit and/or logic, Physical Layer (PHY) circuit and/or logic, baseband (BB) circuit and/or logic, a BB processor, a BB memory, Application Processor (AP) circuit and/or logic, an AP processor, an AP memory, and/or any other circuit and/or logic. By way of example, the processing circuitry 310 can perform baseband processing on the digital baseband signals to recover data included in wireless data transmissions. The processing circuitry 310 may control and/or arbitrate transmit and/or receive functions of the RF transceiver 300, perform one or more baseband processing functions (e.g., media access control (MAC), encoding/decoding, modulation/demodulation, data symbol mapping, error correction, etc.). In aspects, functions of processing circuitry 310 can be implemented in software and/or firmware executing on one or more suitable programmable processors, and may be implemented, for example, in a field programmable gate array (FPGA), application specific integrated circuit (ASIC), etc.

Each RF-chain 321a-d may provide RF processing of communication signals conveyed via the corresponding communication path 325a-d to transmit radio communication signals via the respective antennas 322a-d based on signals (e.g. baseband communication signals, digital signals) received from the processing circuitry 310 over the respective communication paths 325a-d. Each RF-chain 321a-d may provide RF processing of communication signals conveyed via the corresponding communication path 325a-d to receive radio communication signals via the respective antennas 322a-d and provide signals to the processing circuitry 310 over the respective communication paths 325a-d. The processing circuity 310 may be configured to control operations of the RF-chains 321a-d. Each RF-chain 321a-d may include a receive path to provide RF processing to receive radio communication signals from the respective antennas 322a-d, and a transmit path to provide RF processing to transmit radio communication signals via the respective antennas 322a-d.

In a receive (RX) path, RF chains 321a-d may receive analog radio frequency signals from the respective antennas 321a-d via respective communication paths 325a-d and perform analog and digital RF front-end processing on the analog radio frequency signals to produce digital baseband samples (e.g., In-Phase/Quadrature (IQ) samples) to provide to the processing circuitry 310. In various examples, RF circuitry 320 may include two RF-chains per antenna element, each of RF-chains may be designated for a particular polarization. Each RF-chain 321a-d of the RF circuitry 320 may include analog and digital reception components including amplifiers (e.g., Low Noise Amplifiers (LNAs)), filters, RF demodulators (e.g., RF IQ demodulators)), and analog-to-digital converters (ADCs), which each RF chain may utilize to convert the received radio frequency signals to digital baseband samples.

In a transmit (TX) path, each RF chain 321a-d of the RF circuitry 320 may receive digital baseband samples from processing circuitry 310 and perform analog and digital RF front-end processing on the digital baseband samples to produce analog radio frequency signals to provide to respective antennas 322a-d via respective communication paths 325a-d for radio transmission. Each RF chain 321a-d of the RF circuitry 320 may thus include analog and digital transmission components including amplifiers (e.g., Power Amplifiers (PAs), filters, RF modulators (e.g., RF IQ modulators), and digital-to-analog converters (DACs), which each RF chain may utilize to mix the digital baseband samples received from processing circuitry 310 and produce respective analog radio frequency signals for radio transmission by the respective antennas 322a-d. In some aspects, the processing circuitry 310 may control the radio transmission and reception of each RF chain 321a-d of the RF circuitry 320, including specifying the transmit and receive radio frequencies for the operation of the RF circuitry 320.

In accordance with various aspects provided herein, the RF circuitry 320 may be configured to apply a BO operation. The RF circuitry 320 may include a controller 329 to control the application of the BO operation. A BO operation may include a PBO. The controller 329 may be configured to control one or more components of each RF-chain 321 individually to apply the BO operation individually to the respective transmission paths (i.e. communication paths 325a-d). Accordingly the controller 320 may be configured to adjust transmit power for radio communication signals to be transmitted by at least one of the antennas 322a-d, set a maximum transmit power value at a respective memory (e.g. a register), which may define a transmit power limit for one or more radio communication signals to be transmitted by the respective one or more antennas 322a-d, control an operation mode or a gain of an amplifier included by at least one of the RF-chains 321a-d, control a supply power controller that may provide power to some components which may include amplifiers of the RF-chains 321a-d respectively. Although the controller 329 is depicted in a manner that RF circuitry 320 includes the controller 329, in some aspects, the processing circuitry 310 may be configured to control the application of the BO operation, and the processing circuitry 310 may include the controller 329.

The controller 329 may be configured to apply the BO operation based on a received information signal (e.g. a designated signal, a trigger signal, a designated data sequence) that may indicate a detection of a human body part within the vicinity of the antennas 322a-d. A separate proximity sensor that is external to the RF transceiver 600, which may be, or may include, a specific absorption rate (SAR) sensor, may be configured to perform the detection. The controller 329 may be coupled to a second interface 332 that is configured to, and designated to, receive the corresponding information signal. The controller 329 may, in response to receiving an information signal representing a human detection in the vicinity of the antennas 322a-d, apply the BO.

In various aspects, the second interface 332 may include a pin that is designated and configured to receive the information signal. The second interface 332 may, in particular, include a dynamic power reduction (DPR) pin which is coupled to the controller 329. The controller 329 may, responsive to signal received via the DPR pin, apply the BO operation to reduce the TX power.

FIG. 4 shows an exemplary illustration of an RF-chain. An RF-chain (e.g. each RF-chains 321a-d) may couple to a processing circuitry (e.g. the processing circuitry 310) via a communication path 325 designated to carry communication signals between the processing circuitry and an antenna. The RF chain 321 may further include further components and or circuits, such as further filter circuits, synthesizer circuits, etc.. The RF chain 321 may include various circuits and components deployed on the respective transmission path. The RF chain 321 may include DACs 411a-b to convert I/Q signals received from modem, respective intermediate frequency (I/F) amplifiers 412a-b to amplify received I/Q signals, an I/Q modulator 413 to modulate received I/Q signals. The RF chain 321 may further a variable gain amplifier 414 for a first amplification of communication signals , a band filter 415 to filter first amplified signals, a local oscillator 450 and a mixer 416 to upconvert received signals to a designated RF carrier frequency band. A second band filter 417 may be employed to filter output of mixer 416. The RF circuit may further include a power amplifier (PA) 418 configured to amplify RF signals. The RF chain 321 may be coupleable to the respective antenna. In some examples, the RF chain 321 may include further components before it is coupled to the respective antenna, such as phase shifters, precoders, a matching circuit, etc.

It is to be noted that the PA may include any type of amplifier circuit usable for the respective communication technology and the associated use case. The RF-chain may include various power amplifiers for various purposes, such as an amplifier for cellular communication, an amplifier for WLAN communication, a middle band amplifier, a high band amplifier, a middle and high band amplifier, an ultra-high band amplifier. Furthermore, the amplifier may be a module, such as a power amplifier and a duplexer module.

The RF-chain may further include a transmit power control circuit (TPC) 420 to control the power of RF signal transmitted by the antenna. The TPC 420 may control the transmission power of the antenna by configuring amplification rates of the power amplifier 418 and/or the variable gain amplifier 414. The TPC 420 may be configured by the processing circuitry to control transmission power of the antenna according to designated power values or configurations to maintain communication between the transmitting entity and the respective receiving entity. In various aspects, the TPC 420 may monitor the TX power of radio communication signals. The TPC 420 may be coupled to the transmission path via a coupler 419 to measure power of radio communication signals.

In some aspects, the TPC 420 may be further configured to receive control signals from a controller (e.g. the controller 329) that is configured to apply a BO operation. In such examples, the controller may cause the TPC 420 to reduce the TX power of the radio communication signals transmitted by the respective antenna coupled to the transmission path. Reducing the TX power may include causing the antenna to transmit no radio communication signal. In some aspects, the TPC 420 may be configured to control the TX power based on an upper limit defining the maximum amount of TX power with which the RF signals are to be transmitted. In some aspects, the controller may cause the TPC 420 to reduce the upper limit defining the maximum amount of TX power associated for RF transmission of the RF-chain 321. In such cases, the TPC 420 may set the TX power to any power amount that is below the upper limit. Additionally, or alternatively, the RF-chain 321 may include a designated RF-chain controller that is configured to control various components of the RF-chain including illustrated components/circuits to apply the BO individually for the RF-chain, which may, in particular, include controlling gains or amplification configurations of the amplifiers 414, 418. The RF-chain controller may be coupled to the controller via a designated interface.

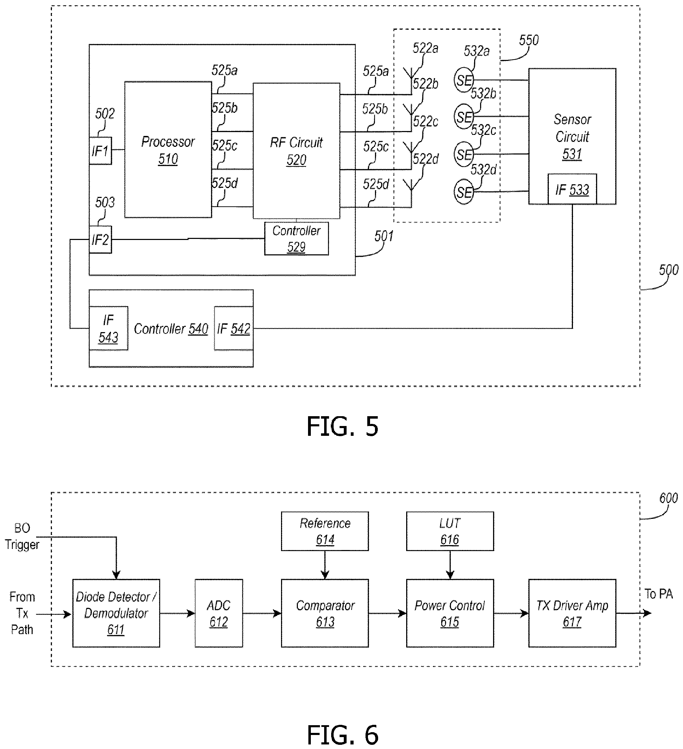

FIG. 5 shows an example of an apparatus for a radio communication device. The radio communication device may be a mobile radio communication device configured to perform communication operations according to at least one of a cellular communication protocol, a WLAN communication protocol, a wireless private area network (WPAN) protocol, a wireless wide area network (WWAN) protocol, a Bluetooth communication protocol, an IoT communication protocol, etc. In various aspects, the apparatus 500 may be an RF transmitter, an RF circuitry, or an RF module. The apparatus 500 may include an RF transceiver (e.g. the RF transceiver 300) 501 that may include a processor 510 (e.g. the processor 310) configured to provide/receive communication signals via a plurality of paths 525a-d (e.g. paths 325a-d) to/from an RF circuit 520 (e.g. the RF circuitry 320). The RF circuit 520 may include RF-chains (e.g. RF-chains 321a-d) to provide RF processing respectively for the paths 525a-d to communicate via a plurality of antennas 522a-d respectively.

The RF transceiver 501 may further include a controller 529 (e.g. the controller 329) configured to control BO operation, a first interface 502 (e.g. the first interface 331) configured to communicate with a main processor and a main memory of the radio communication device, and a second interface 503 (e.g. the second interface 332) that is coupled to the controller 529, which the second interface 503 may be designated to receive signals related to detection of human presence. The controller 529 may be configured to apply the BO based on signals received from the second interface 503. In various examples, the processor 510 may include the controller 529, or implement various operations disclosed here for the controller 529. In some examples, the controller 529 may be a processing circuitry external to the processor 510.

The apparatus 500 may further include a proximity sensor configured to detect a presence in the vicinity of the antennas 522a-d. In particular within the context of SAR detections, the antennas 522a-d may be deployed on a designated areas of the housing of the radio communication device. In other words, the radio communication device may include a housing comprising the antennas 522a-d that are configured to transmit (and receive) radio communication signals to one or more predefined directions. The proximity sensor may include at least one sensing element that is configured to detect a proximity of an object at the one or more predefined directions which the antennas 522a-d are configured to transmit radio communication signals. In some examples, the at least one sensing element may be deployed on the housing, such that the monitoring area of the at least one sensing element includes the one or more predefined directions which the antennas 522a-d are configured to transmit radio communication signals.

In various aspects, the proximity sensor may include a SAR sensor. A SAR sensor is a specific type of sensor that may be configured to distinguish a proximity of inanimate objects from a proximity of human body parts. There are various methods that a SAR sensor may apply to make the determination whether a proximate object is an inanimate object or a human body part, such as estimating that a proximate object is human based on movements of the respective object, triggered sensing elements, employment of capacitive sensing elements (e.g. whether the proximate object is a conductive object), etc. In various aspects of this disclosure, a proximity sensor may be configured to detect the human presence.

In some aspects, the proximity sensor may be configured to detect a presence in the vicinity of the plurality of antennas 522a-d. In such an example, the proximity sensor may include one (or more) sensing elements configured to detect a presence in the vicinity of, in particular in Tx direction of the plurality of antennas 522a-d. In some aspects of this disclosure, the proximity sensor may be configured to detect a presence in the vicinity of each of the plurality of antennas 522a-d individually. Accordingly, the proximity sensor may detect which of the plurality of antennas 522a-d have an object (e.g. human body part) within their respective proximity, such as if there is an object detected in transmission direction of each of the antennas 522a-d. The proximity sensor may provide an output representative of antennas 522a for which a proximity of an object is detected. In other words, the proximity sensor may indicate at least one or more antennas of the plurality of antennas 522a-d for which the proximity sensor has detected a presence. Alternatively, or additionally, the proximity sensor may include a plurality of sensing elements, and the proximity sensor may be configured to indicate at least one or more sensing elements of the plurality of sensing elements which have detected a presence.

In various aspects, a detection of an object (e.g. a human body part) in the vicinity of one or more antennas may be based on a monitoring of a designated area, a designated volume or a designated direction which may be defined relative to sensing elements or the one or more antennas. Skilled person would recognize from the context of SAR procedures that sensing elements may be configured to perform the monitoring for an area or a volume that may include the one or more antennas, or transmission directions of the one or more antennas based on the deployed location of the sensing elements relative to the one or more antennas. Exemplarily, the vicinity of one or more antennas may include an area surrounding the one or more antennas, a sensing element deployed within the area close to the one or more antennas may be configured detect the presence. The vicinity of an antenna may exemplarily include a near-field of the antenna or a portion of the near-field of the antenna.

In this illustrative example, the proximity sensor includes a sensor circuit 531 coupled to a plurality of sensing elements 532a-d. The proximity sensor may include the sensing elements 532a-d, or in some examples, the proximity sensor may include a sensing element interface configured to provide communication between the sensing elements 532a-d and the sensor circuit 531. The sensor circuit 531 may include a proximity sensor processing circuitry configured to process information received from the sensing elements 532a-d and determine an object is detected. The proximity sensor processing circuitry may be configured to determine whether an object is present within the proximity of the plurality of sensing elements 532a-d. Alternatively, or additionally, the proximity sensor processing circuitry may be configured to determine whether an object is present within the proximity of each sensing element of the plurality of sensing elements 532a-d.

The sensing elements 532a-d may be configured to monitor (e.g. human body part presence) the vicinity of the antennas 522a-d. In this illustrative example, the radio communication device may include a housing 550 including the antennas 522a-d (i.e. the antennas 522a-d are deployed on the housing) positioned to radiate in a direction (i.e. Tx direction) which may be defined relative to the housing 550. The housing 550 may also be configured to accommodate the sensing elements 532a-d, such that each sensing element 532a-d may monitor an area including a respective antenna, or a Tx direction of a respective antenna of the plurality of antennas 522a-d. Each sensing element 532a-d may accordingly provide information to the proximity sensor processing circuitry to indicate a detection of an object for the respective antenna 522a-d.

The information that each sensing element 532a-d provides may include an analog signal representative of the monitoring that the respective sensing element 532a-d performs. In various examples, the information may include encoded digital data, which a processing circuitry of each sensing element may encode. Based on the use case, information provided by each sensing element 532a-d may represent monitoring of proximity of the respective sensing element 532a-d. For example, in case of the proximity sensor being configured to detect proximity based on capacitance, provided information may include a capacitance value detected by the respective sensing element 532a-d. Each sensing element 532a-d may provide the information continually, periodically, or aperiodically based on a received instruction from the sensor circuit 531 (e.g. proximity sensor processing circuitry).

The sensor circuit 531 may be configured to receive the information provided by each sensing element 532a-d and provide sensor circuit information representative of a presence detected by the sensing elements 532a-d. In various examples, the sensor circuit information may include a proximity signal that may indicate an object presence in the vicinity of the antennas 522a-d. In various examples, the sensor circuit information may indicate a detect presence of an object in the respective vicinity of each of the antennas 522a-d. In various examples, the sensor circuit information may indicate proximity detected sensing elements 532a-d of the sensing elements 532a-d, which the proximity detected sensing elements 532a-d are the sensing elements 532 that have detected an object.

In various aspects, the sensor circuit 531 may include an interface 533 (e.g. interface circuit) configured to communicate with other circuits or components of the radio communication device according to a designated communication protocol. The designated communication protocol may exemplarily include an I2C communication protocol. In various aspects, the interface 533 may include a designated pin (e.g. a general purpose input/output (GPIO) pin), by which the sensor circuit 531 is configured to provide output including the sensor circuit information. The proximity sensor processing circuitry may cause the sensor circuit 531 to provide output including the sensor circuit information via the interface 533.

In accordance with various aspects of this disclosure, the apparatus 500 may include a controller 540, such as an embedded controller, configured to trigger the BO operation based on the output of the proximity sensor (e.g. the output of the sensor circuit 531 via the interface 533) . It may be desirable to employ such a designated controller to ensure that BO is applied, for example when the main processor of the radio communication device may operate in a low power mode or may be unresponsive for various reasons, or the operating system (OS) may be in an unresponsive state, or may have crashed. It may be desirable to operate and maintain BO to ensure that SAR limitations designated for the radio communication device is applied in those cases and provide prevention of long exposure of RF signals to a human body part, in which the main processor is unable to provide information to trigger the BO operation.

The controller 540 may include a first interface 542 coupled to the sensor circuit 531 to receive the sensor circuit information. The controller 540 may further include a second interface 543 coupled to the second interface 503 of the RF transmitter 501. The controller 540 may provide a detection signal to the RF transmitter 501 in order to trigger the BO operation. In various examples, the first interface 542 of the controller 540 and the second interface 543 of the controller 540 may be implemented by a common interface, via which the controller 540 may communicate with the RF transmitter 501 via the second interface 502 of the RF transmitter 501 and the interface 533 of the sensor circuit 531.

In various aspects, the controller 540 may include a circuitry configured to provide a signal representative of a detected presence (e.g. "detection signal") by the proximity sensor (e.g. sensing elements 532a-d and/or sensor circuit 531). The controller 540 may receive sensor circuit information from the sensor circuit 531 that may include a proximity signal, and the controller 540 may generate the detection signal based on received proximity signal. Considering that the second interface 503 of the RF transmitter 501 may be a DPR pin, the generated detection signal may be a predefined interrupt signal designated to represent the detection of the presence by the proximity sensor.

In various aspects, the controller 540 may generate the detection signal based on received sensor circuit information and a look up table stored in a memory. The controller 540 may include a memory configured to store a look up table. The look up table may be a predefined look up table. The look up table may include information providing a mapping between the received sensor circuit information and detection signal to be provided to the RF transmitter 501.

For example, received sensor circuit information may include information representing one or more triggered sensing elements of the sensing elements 532a-d, which the one or more triggered sensing elements have detected a presence. The look up table may include information to map the one or more triggered sensing elements to one or more antennas of the antennas 522a-d. In some examples, the processing circuitry of the controller 540 may encode information representing the one or more antennas to be sent to the RF transmitter 501. In various examples, the controller 540 may include a digital to analog converter configured to generate an analog detection signal based on the look up table. In this example, the look up table may include information to provide a mapping between the received sensor circuit information and an attribute associated with generation of the analog detection signal, such as the voltage of the analog signal.

In accordance with various aspects provided herein, the controller 540 may provide detection signal to the RF transmitter 501 via the second interface 503 of the RF transmitter 501, which the provided detection signal represents whether there is a detected presence by the proximity sensor, and in some aspects, the provided detection signal may further indicate the sensing elements 532a-d that have detected the respective presences, or may further indicate the antennas 522a-d for which the sensing elements 532a-d have detected a respective presence.

The controller 529 of the RF transmitter 501 may be coupled to the second interface 503. The controller 529 may, responsive to the signal provided by the second interface 503, apply the BO to the transmission paths 525a-d individually. In various aspects, the controller 529 may obtain information indicating one or more transmission paths 525a-d of the transmission paths 525a-d to which a BO is to be applied based on the received detection signal.

In some aspects, the controller 529 may initiate a detection procedure, which the processor 510 may detect changes at signal power reflected from the antennas 522a-d respectively at each transmission path 525a-d, and the processor 510 may determine the one or more transmission paths 525a-d to which a BO is to be applied based on detected changes at each transmission path 525a-d. In various examples, the processor 510 may monitor VSWR from each antenna 522a-d at the respective transmission paths 525a-d, and determine the one or more transmission paths 525a-d based on the change at the VSWR of the respective antennas 522a-d. In some examples, the processor 510 may determine the one or more transmission paths 525a-d based on a change at the reflected signal power and a predefined look up table. In some examples, the processor 510 may adjust transmit power of each antenna 522a-d individually based on a detected change at the reflected signal power at the respective transmission path 525a-d.

The controller 529 may be coupled to the RF circuit 520 to apply the BO individually to each transmission path 525a-d. In particular, the controller 529 may be coupled to each transmission path 525a-d to monitor the signal power reflected from the antennas 522a-d respectively.

In various aspects, each transmission path 525a-d may include an amplifier configured to amplify communication signals conveyed via the respective transmission path 525a-d. The amplifier may be a power amplifier, or a variable gain amplifier such as a driver amplifier configured to amplify communication signals before amplification of the power amplifier in the respective transmission path 525a-d. Application of the BO may include reducing the gain that is set at the respective amplifier to reduce the Tx power. In various aspects, the amplifier may be configured to operate in a first configuration in which the amplifier amplifies the communication signals based on a gain set by a TPC circuit. The amplifier may be further configured to operate in a second configuration in which the amplifier amplifies the communication signals based on a predefined gain that is substantially lower than the gain set by the TPC circuit, and in various aspects the predefined gain may be a zero gain or a gain smaller than 1. The application of the BO may include switching the configuration of the amplifier to the second configuration in which the amplifier may provide no amplification. In various examples, the second configuration may include powering down or turning off the amplifier.

FIG. 6 shows an example of a controller of an RF transmitter in accordance with various aspects provided herein. The controller 600 may include a controller (e.g. the controller 529) that may be configured to apply the BO to a transmission path based on a detected change at the signal power reflected from an antenna coupled to the transmission path. In various examples, the controller 600 may be coupled to a plurality of transmission paths to provide operations disclosed herein for multiple paths, for example sequentially. In some examples, a controller (e.g. the controller 529) may include multiple controllers each including the controller 600, and each controller may be coupled to one transmission path.

In order to deliver optimal power via an antenna, the antenna may be matched with a configured matching circuit matching the impedance of the transmission line. On the other hand, objects within the proximity of the antennas may change the properties of the radio communication medium and cause a change at the impedance. The changed impedance may result in a mismatch of the impedance between the impedance of the transmission line and the respective antenna, thereby increase the signal power reflected by the antenna, and decrease the signal power transmitted by the antenna. This may be referred to as a detuning of the antenna. In various aspects, signal power reflected by an antenna may be expressed as a VSWR indicating a measure of how efficiently RF power is transmitted from a source of the signal, through transmission line, to an antenna. Within this context, a higher VSWR indicates a higher reflected signal power (i.e. lower Tx power).

In accordance with various aspects provided herein, the controller 600 may determine whether there is an object (e.g. a human body part) within the proximity of an antenna based on the detuning of the respective antenna. In order to identify the detuning, the controller 600 may detect a change at a signal power reflected from the transmission path which the antenna is configured to receive radio communication signals. Based on a detected change, the controller 600 may determine that there is an object within the proximity of the antenna. Furthermore, the controller 600 may adjust Tx power of the respective antenna (i.e. Tx power associated with the RF signals transmitted by the antenna) based on the detected change.

In some aspects, it may be desirable to cause the controller 600 to monitor the transmission paths in order to determine whether there is an object within the proximity of the respective antennas in response to a received detection signal indicating a presence of the object. The controller 600 may monitor the transmission paths for a predefined period of time. In such examples, the received detection signal may indicate that there is an object within the proximity of a plurality of antennas (i.e. without specifying an antenna). In response to the received detection signal, the controller 600 may initiate monitoring of the transmission paths, as it may be desirable to reduce costs of the monitoring procedure by avoiding constant monitoring and processing of reflected signals.

The controller 600 may include an envelope detector, such as a diode detector or a demodulator 611 configured to detect envelope of reflected RF signals received from the Tx path which is connected to the respective antenna to be monitored. A coupler may be connected to the Tx path, and the diode detector or demodulator 611 may be coupled to the coupler to receive RF signals. In some aspects, the coupler may be coupled to the output of the power amplifier of an RF chain configured to provide RF processing for the respective Tx path. A received instruction indicating a trigger of BO operation (e.g. a signal based on received detection signal) may trigger the operation of the diode detector/demodulator 611. In some examples, the received instruction indicating the trigger of BO operation may trigger the respective coupler, or a switch coupled between the coupler and the diode detector/demodulator 611.

The controller 600 may further include an analog to digital converter 612 to initiate the detection of the change at the reflected signal power digitally. The ADC 612 may convert the output of the diode detector/demodulator 611 into a digital signal, which a comparator 613 may receive the digital signal. The comparator 613 may compare the output of the ADC 612 with a reference value 614 stored in a memory (e.g. a register) to determine whether to apply the BO for the respective Tx path.

Illustratively, assuming 10% of power of the RF signal may be reflected from the antenna during an operation in which there is no external proximate object at the antenna that would detune the antenna, and assuming that coupler has 30 dB isolation from the transmission path, an estimated power received from the coupler by the diode detector/demodulator 611 may be around 40 dB. Further assuming that a human body part proximity may cause a change at the reflected power by which the power of the reflected signal may be changed by 4 to 5 dB, which may result in 35 dB down or 45 dB down depending on the respective antenna. The exemplary provided dB values are relative to the power of the transmitted RF signal.

According to the illustration mentioned in the above-paragraph, a reference value may cause the comparator 613 to determine that there is a human body part at the proximity of the antenna based according to a window of 4 dB centered over 40 dB down from the TX power (i.e. -40 dB). In other words, the comparator 613 may be configured to provide an output representing the detection of the human presence at the respective antenna based on a threshold that is set to 4 dB.

It is to be noted that the above mentioned comparison is provided only for exemplary purposes. In various aspects, the comparator 613 (and further components of the controller 600) may be configured to perform any type of comparison that may result in detecting the detuning of the antenna via detecting a change at the reflected signal. In various aspects, the comparator 613 may be configured to compare the amplitude or frequency of the reflected signal, and accordingly, the reference value 614 may include a predetermined amplitude or a predetermined frequency. Furthermore, the reference 614 value may be set based on an initial determination of the reference value (e.g. a value of a calibrated signal property (e.g. amplitude, frequency, or power) measured when there is no detuning (i.e. no body part within the proximity) and a predefined threshold). Practically, the comparator may be configured to compare the difference of abs(calibrated signal property value-signal property value of measured signal received from the ADC 612) with a predefined threshold. In that example, the reference 614 stored in the memory may include the calibrated signal property value and the predefined threshold. Accordingly, the output of the comparator 613 may indicate whether there is a human body part at the proximity of the respective antenna which the controller 600 is coupled to.

The controller 600 may further include a power control logic 615 configured to adjust the TX power of the respective antenna based on the output of the comparator 613. The power control logic 615 may, in response to the determination by the comparator 613 representing that there is a human body part at the proximity of the respective antenna (i.e. output representing the detection of the human presence), determine a configuration in which the Tx power is adjusted based on a look up table 616 stored in a memory.

The look up table 616 may include information of a plurality of values or parameters, each value or parameter representing a configuration of a PO operation to adjust the Tx power of the respective antenna. The configuration may include a power configuration for the RF signals of the respective Tx path, a gain configuration for an amplifier of the respective Tx path. The power control logic 615 may select the respective configuration of the PO operation to be applied for the respective Tx path.

It is to be noted that the respective Tx path may be configured to perform communication operations for various frequency bands. Furthermore, the antennas of which the controller 600 may be configured to adjust the Tx power may have different features and operation ranges. It may be desirable for the controller 600 to have flexibility and interoperability for different RF transmitter and antenna configurations. For this purpose, the look up table 616 may include information representing a plurality of PO configurations, wherein each PO configuration is designated for a particular antenna and a frequency band.

An exemplary representation of a look up table for a controller configured to adjust Tx power of n number of antennas can be provided with the table below. As can be seen from the table below, the look up table may include n number of PO configurations provided as RF Tx power dBm for each antenna and for each frequency band of N1...N99 frequency bands:

| **Band Details** | **Power Back-off** | | | | |
|---|---|---|---|---|---|
| | **ANT1** | **ANT2** | **ANT3** | | **ANTn** |
| N1 | 14dBm | 13dBm | 13dBm | • • • | 13dBm |
| N2 | 15dBm | 14dBm | 14dBm | | 14dBm |
| N3 | 16dBm | 17dBm | 13dBm | | 14dBm |
| N4 | 15dBm | 14dBm | 14dBm | | 13dBm |
| N5 | 13dBm | 15dBm | 13dBm | | 14dBm |
| N7 | 16dBm | 16dBm | 17dBm | | 16dBm |
| • • • | | | | | |
| N99 | 16dBm | 17dBm | 13dBm | | 15dBm |

Accordingly, the power control logic 615 may select a power configuration from the look up table 615 based on the respective antenna for which the human presence is detected and the frequency band of the RF signals that are carried by the respective Tx path to the respective antenna. The power control logic 615 may, based on the selected power configuration, control a Tx driver amplifier 617 that is configured to drive the respective power amplifier of the respective Tx path to reduce the Tx power according to the selected power configuration. The Tx driver amplifier 617 may accordingly set its gain based on the selected power configuration, and as the input RF signal of the respective power amplifier is reduced according to the selected power configuration, the output of the respective power amplifier is also to be reduced, thereby reducing the Tx power of the respective antenna. In various examples, the power control logic 615 may further directly control the respective power amplifier of the respective Tx path to reduce the Tx power.

The power control logic 615 may maintain the control of the Tx driver amplifier 617 (or the respective power amplifier) until the comparator 613 determines not to apply the BO to the respective Tx path (i.e. the comparator 613 may provide an output representing no detection of a human presence at the respective antenna). In various aspects, the controller 600 may receive an instruction indicating an end of BO operation (e.g. a signal based on received detection signal indicating that the proximity sensor does not detect any presence) and the power logic control logic 615 may cease controlling the Tx driver amplifier 617 (or the respective power amplifier) in response to the received instruction.

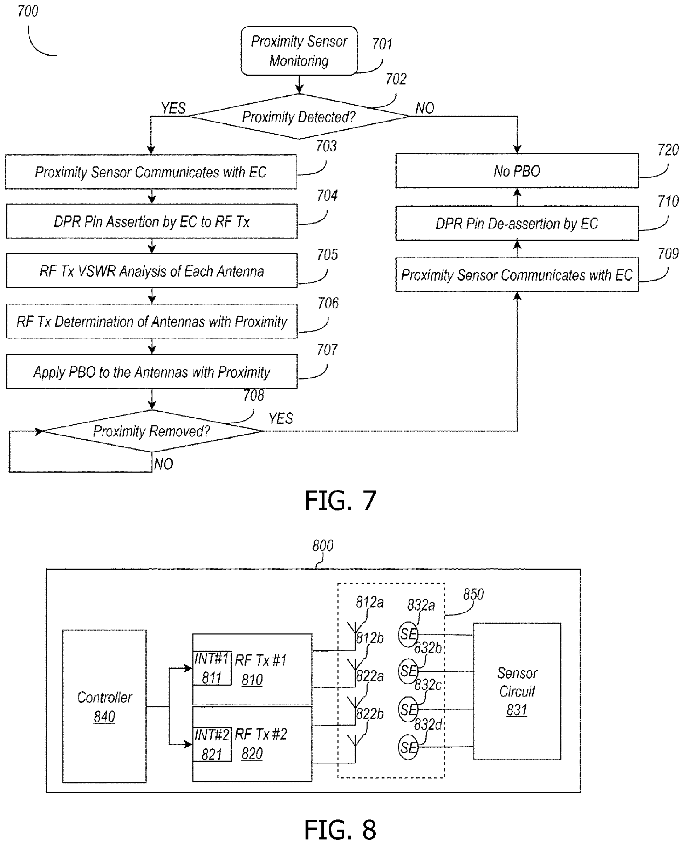

FIG. 7 shows an example of a procedure in accordance with various aspects provided herein. The procedure 700 may begin with an operation of a proximity sensor (e.g. the proximity sensor provided with respect to FIG. 5) to monitor 701 presence of an object (e.g. human body part) at the vicinity of a plurality of antennas (e.g. the antennas 522a-d) coupled to an RF transceiver (e.g. RF transmitter 501). In case the proximity sensor detects 702 an object within the proximity of the plurality of antennas, the proximity sensor may communicate 703 with an embedded controller (e.g. the controller 540) to indicate a detection of an object within the proximity of the antennas. In case the proximity sensor detects no objects in the vicinity of the antennas, no PBO is applied at the RF transceiver.

Based on a received indication representing the detection of an object within the proximity of the antennas, the embedded controller may assert 704 the respective DPR pin of the RF transceiver. A controller (e.g. the controller 529, or the controller 600) may, in response to the assertion of the respective DPR pin, start monitoring 705 the signal power reflected at each of the plurality of antennas and analyze VSWR of each antenna. Based on the VSWR measurements of each of the antennas, the controller may 706 determine one or more antennas from the plurality of antennas, as antennas with an object proximity, based on the VSWR measurements that have changed based on a respective thresholds. Once the controller has identified the antennas with an object proximity, the controller may apply a PBO to the antennas with the object proximity individually.

The application of the PBO (reducing the Tx power) of the antennas with the object proximity may continue 708 until the proximity is removed. In case the proximate objects are removed from the vicinity of the antennas, the proximity sensor may detect that there are no objects within the vicinity of the antennas, and the proximity sensor may communicate 709 information representing that there are no objects within the vicinity of the antennas to the embedded controller. In response to receiving information representing that there are no objects within the vicinity of the antennas, the embedded controller may de-assert 710 the DPR pin of the RF transceiver. The controller may, based on the de-assertion of the DPR pin, cease applying the BO for all of the antennas.

In various aspects, in which RF transmitters can detect object presence for each antenna based on a change at the signals reflected from the respective antenna, the provided aspects may further provide a scalability for radio communication devices including a plurality of RF transmitters. In particular, the simplicity of the implementation and to ensure of PBO application when the main processor of the radio communication is unresponsive or in a low power mode can be maintained. Furthermore, the proximity detection and PBO application may be functional during connected modem standby as well.

FIG. 8 shows an example of an apparatus in accordance with various aspects provided herein. The apparatus may include a plurality of RF transmitters 810, 820 including a first RF Tx 810 and a second RF Tx 820. The first RF Tx 810 may be an RF transceiver (e.g. an RF transceiver 501) and the second RF Tx 820 may also be another RF transceiver (e.g. another RF transceiver 501). Each RF Tx 810, 820 may respectively include a plurality of RF chains, an RF Tx controller (e.g. the controller 600), and a plurality of Tx paths. The plurality of Tx paths of the first RF Tx 810 may be coupled to a first plurality of antennas 812a-b. The plurality of Tx paths of the second RF Tx 820 may be coupled to a second plurality of antennas 822a-b. Each RF Tx 810, 820 may respectively include an interface (e.g. a DPR pin) designated to receive a detection signal, and the respective RF Tx controllers of each RF Tx 810, 820 may be configured to apply a BO operation including determination of antennas having an object proximity based on a detection of signals reflected at each respective antenna of the respective RF Tx 810, 820, analogous to the controller 600.

The apparatus 800 may further include a proximity sensor configured to detect a presence in the vicinity of the antennas 812a-b, 822a-b. In particular within the context of SAR detections, the antennas 812a-b, 822a-b may be deployed on a designated areas of the housing of the radio communication device. In other words, the radio communication device may include a housing comprising the antennas 812a-b, 822a-b that are configured to transmit (and receive) radio communication signals to one or more predefined directions. The proximity sensor may include at least one sensing element 832a-d that is configured to detect a proximity of an object at one or more areas including the antennas 812a-b, 822a-b, or the one or more predefined directions which the antennas 812a-b, 822a-b are configured to transmit radio communication signals. In some examples, the at least one sensing element 832a-d may be deployed on the housing, such that the monitoring area of the at least one sensing element 832a-d includes the one or more predefined directions which the antennas 812a-b, 822a-b are configured to transmit radio communication signals.

In various aspects, the proximity sensor may include a SAR sensor. A SAR sensor is a specific type of sensor that may be configured to distinguish a proximity of inanimate objects from a proximity of human body parts. There are various methods that a SAR sensor may apply to make the determination whether a proximate object is an inanimate object or a human body part, such as estimating that a proximate object is human based on movements of the respective object, triggered sensing elements, employment of capacitive sensing elements (e.g. whether the proximate object is a conductive object), etc. In various aspects of this disclosure, a proximity sensor may be configured to detect the human presence.

The proximity sensor may be configured to detect a presence in the vicinity of the plurality of antennas 812a-b, 822a-b. The proximity sensor may further include a sensor circuit 831 coupled to a plurality of sensing elements 832a-d. The proximity sensor may include the sensing elements 832a-d, or in some examples, the proximity sensor may include a sensing element interface configured to provide communication between the sensing elements 832a-d and the sensor circuit 831. The sensor circuit 831 may include a proximity sensor processing circuitry configured to process information received from the sensing elements 832a-d and determine an object is detected. The proximity sensor processing circuitry may be configured to determine whether an object is present within the proximity of the plurality of sensing elements 832a-d.

The sensor circuit 831 may be configured to receive the information provided by each sensing element 832a-d and provide sensor circuit information representative of a presence detected by the sensing elements 832a-d. In various examples, the sensor circuit information may include a proximity signal that may indicate an object presence in the vicinity of the antennas 812a-b, 822a-b. In various aspects, the sensor circuit 831 may include an interface (e.g. interface circuit) configured to communicate with other circuits or components of the radio communication device according to a designated communication protocol. The designated communication protocol may exemplarily include an I2C communication protocol.

In accordance with various aspects of this disclosure, the apparatus 800 may include a controller 840, such as an embedded controller, configured to trigger the BO operation based on the output of the proximity sensor (e.g. the output of the sensor circuit 831) . It may be desirable to employ such a designated controller to ensure that BO is applied, for example when the main processor of the radio communication device may operate in a low power mode or may be unresponsive for various reasons, or the operating system (OS) may be in an unresponsive state, or may have crashed. It may be desirable to operate and maintain BO to ensure that SAR limitations designated for the radio communication device is applied in those cases and provide prevention of long exposure of RF signals to a human body part, in which the main processor is unable to provide information to trigger the BO operation.

The controller 840 may include a first interface coupled to the sensor circuit to receive the proximity signal. The controller 840 may further include a second interface coupled together to the respective interfaces 811, 821, of the plurality of RF transceivers, namely the first RF Tx 810 and the second RF Tx 820. The controller 840 may provide a detection signal to the first RF Tx 810 and the second RF Tx 820 together in order to trigger the BO operation at each of the first RF Tx 810 and the second RF Tx 820.

In various aspects, the controller 840 may include a circuitry configured to provide a signal representative of a detected presence (e.g. "detection signal") by the proximity sensor (e.g. sensing elements 832a-d and/or sensor circuit 831). The controller 840 may receive sensor circuit information from the sensor circuit 831 that may include a proximity signal, and the controller 840 may generate the detection signal based on received proximity signal. Considering that the interfaces 811, 821 may be DPR pins, in this illustrative example, the controller 840 may include a switch coupled to a voltage supply and the interface 811, 821. The controller 840 may generate the detection signal by controlling the switch, causing the voltage supplied by the voltage supply to change. For example, the controller 840 may generate the detection signal by changing the switch to an open position in response to received proximity signal representing the detection of the proximity sensor, causing the voltage to be supplied to the DPR pins (i.e. sending a high signal). Each RF Tx 810, 820 may be configured to apply the BO based on the voltage supplied to the DPR pin. For example, each RF Tx 810, 820 may be configured to apply the BO when the voltage supplied to the respective DPR pin is high, and each RF Tx 810, 820 may be configured to cease the application of the BO when the voltage supplied to the respective DPR pin is low. A threshold may define the high and low voltage.

In accordance with various aspects provided herein, the controller 840 may provide the detection signal to each RF Tx 810, 820, which the provided detection signal represents whether there is a detected presence by the proximity sensor. With the indication provided via the detection signal, which the indication represents there is a detected presence by the proximity sensor, both RF Txs 810, 820 may start monitoring changes at the signals reflected from the antennas 812a-b, 822a-b respectively. In other words, the first RF Tx 810 may monitor changes at the signals reflected from each of the antennas 812a-b, and the second RF Tx 820 may monitor changes at the signals reflected from each of the antennas 822a-b. Accordingly, each RF Tx 810, 820 may perform operations associated with detecting if there is an object within respective proximities of each of the respective antenna 812a-b, 822a-b based on the changes at the respective reflected signals, and reducing Tx power of the respective antennas 812a-b, 822a-b.

The RF Tx controllers of each RF Tx 810, 820 may be coupled to the respective interfaces 811, 821. The RF Tx controllers may, responsive to the signal provided by the respective interfaces 811, 821, apply the BO to the respective transmission paths individually, based on the changes at the respective reflected signals at each transmission path. The RF Tx controllers may initiate a detection procedure, in which RF Tx controllers may detect changes at reflected signals as provided in this disclosure and adjust the Tx power of the respective antennas 812a-b, 822a-b individually.

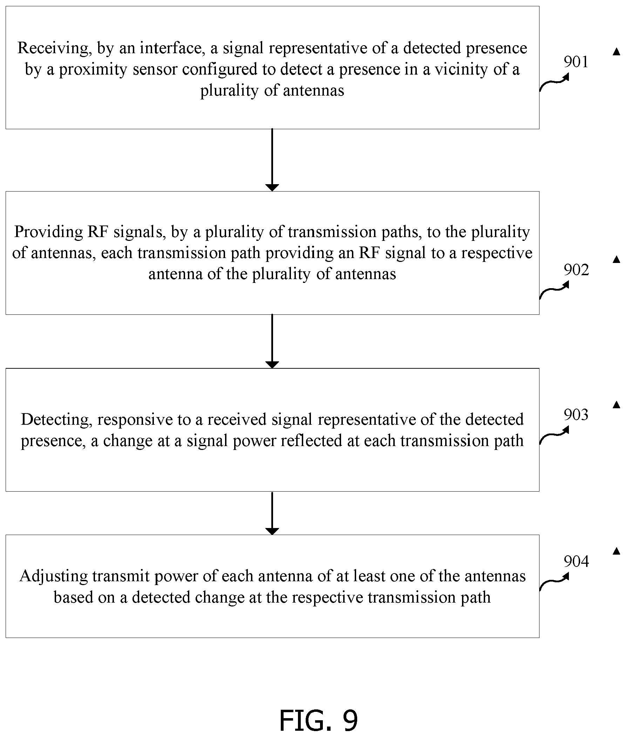

FIG. 9 shows an example of a method. The method may include receiving 901, by an interface, a signal representative of a detected presence by a proximity sensor configured to detect a presence in a vicinity of a plurality of antennas, providing 902 RF signals, by a plurality of transmission paths, to the plurality of antennas, each transmission path providing an RF signal to a respective antenna of the plurality of antennas, detecting 903, responsive to a received signal representative of the detected presence, a change at a signal power reflected at each transmission path, adjusting 904 transmit power of each antenna of at least one of the antennas based on a detected change at the respective transmission path.

In various aspects, a proximity sensor may be configured to detect a proximity for each antenna individually, or in multiple groups, and provide information indicating, or representing, proximity detected antennas of a plurality of antennas, which the proximity detected antennas are antennas of the plurality of antennas that the proximity sensor has detected an object within their vicinity (e.g. within their respective Tx directions). In some aspects, the RF transmitter coupled to the antennas may have constraints with respect to the interface to receive the provided input by the proximity sensor. For example, the interface may include a single pin (e.g. a dynamic power reduction pin), and it may be desirable to convey the information indicating, or representing, proximity detected antennas via the single pin. In various aspects, a separate controller may be employed to deliver the information to the RF transmitter to ensure application of the BO operation when the main processor is unresponsive or is operating in a low power mode.

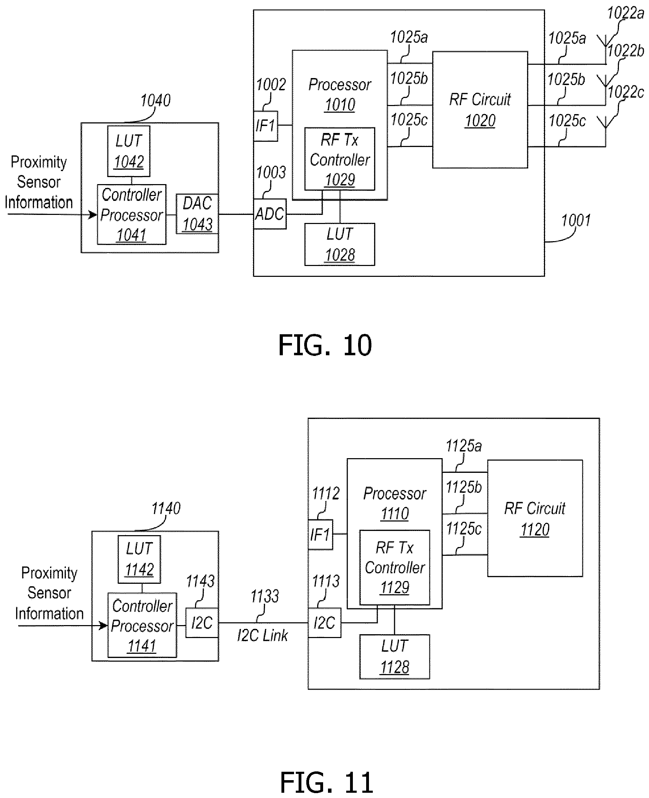

FIG. 10 shows an example of an apparatus for a radio communication device. The apparatus 1000 may include an RF transceiver (e.g. the RF transceiver 500) 1001 that may include a processor 1010 (e.g. the processor 510) configured to provide/receive communication signals via a plurality of paths 1025a-c (e.g. paths 525a-d) to/from an RF circuit 1020 (e.g. the RF circuit 520). The RF circuit 1020 may include RF-chains (e.g. RF-chains 321a-d) to provide RF processing respectively for the paths 1025a-c to communicate via a plurality of antennas 1022a-c respectively. The RF transceiver 1001 may further include an RF Tx controller 1029 (e.g. the controller 529) configured to control BO operation, a first interface 1002 (e.g. the first interface 502) configured to communicate with a main processor and a main memory of the radio communication device, and a second interface (e.g. the second interface 503) that is coupled to the RF Tx controller 1029, which the second interface may be designated to receive signals related to detection of human presence. The RF Tx controller 1029 may be configured to apply the BO based on signals received from the second interface. In this illustrated example, the processor 1010 includes the RF Tx controller 1029. Alternatively, the RF Tx controller 1029 may be a separate entity in the RF transceiver 1001. In some examples, the RF Tx controller 1029 may be a processing circuitry external to the processor 1010. The second interface may include a designated pin to apply BO, in particular a dynamic power reduction pin.

In accordance with various aspects of this disclosure, the apparatus 1000 may include a controller 1040, such as an embedded controller, configured to trigger the BO operation based on the output of a proximity sensor. The controller 1040 may be configured to communicate with the proximity sensor to receive sensor information representative of outcome of monitoring of the proximity sensor. An exemplary proximity sensor is provided in accordance with FIG. 5, of which the details may be found if needed. The proximity sensor may be configured to provide proximity sensor information (e.g. sensor circuit information). The proximity sensor information may indicate, or represent, monitoring of a plurality of sensing elements of the proximity sensor (e.g. measurements), an output information of a sensor circuit representing one or more sensing elements from a plurality of sensing elements that have detected a presence, or proximity detected antennas.

The proximity detected antennas may include one or more antennas of the plurality of antennas 1022a-c, for which the proximity sensor has detected an object within the vicinity (e.g. an object is detected in Tx direction of the one or more antennas). In various examples, the proximity sensor may be configured to detect human presence, and accordingly, the proximity detected antennas may include one or more antennas, for which the proximity sensor has detected a human presence respectively.

It may be desirable to employ such a designated controller to ensure that BO is applied, for example when the main processor of the radio communication device may operate in a low power mode or may be unresponsive for various reasons, or the operating system (OS) may be in an unresponsive state, or may have crashed. It may be desirable to operate and maintain BO to ensure that SAR limitations designated for the radio communication device is applied in those cases and provide prevention of long exposure of RF signals to a human body part, in which the main processor is unable to provide information to trigger the BO operation.

The controller 1040 may include a controller processor 1041, a memory to store a look up table ("controller look up table") 1042, and a digital to analog converter (DAC) 1043 controlled by the controller processor 1041. The controller 1040 may be configured to generate detection signal representing the proximity detected antennas. The controller processor 1041 may be configured to obtain the proximity sensor information and provide an output representative of the proximity detected antennas and the DAC 1043 may convert the provided output into an analog detection signal.

For example, the proximity sensor information may include information representing one or more sensing elements from a plurality of sensing elements that have detected a presence (e.g. triggered sensing elements). The controller look up table 1042 may include information to map the triggered sensing elements to respective one or more antennas which the triggered sensing elements are configured to perform mapping within their respective vicinities (e.g. in the Tx direction of the one or more antennas respectively). The controller processor 1041 may decode received proximity sensor information. The controller processor 1041 may further determine the proximity detected antennas from the plurality of antennas 1022a-c based on the decoded proximity sensor information and the controller look up table 1042.

An exemplary look up table is provided below, as table 1, for the controller 1040 to control an RF transceiver 1001 including the RF circuit 1020 coupled to three antennas 1022a-c, each antenna corresponding to one of three sensors. In this illustrative example, the controller processor 1041 may decode received proximity sensor information to obtain information representing which of the three sensors have detected a presence. Based on the obtained information, the controller processor 1041 may be configured to output information including the corresponding bit configuration from the controller look up table 1042. Based on the output of the controller processor 1041, the DAC 1043 may provide the analog detection signal to the RF transceiver 1001 via the designated pin of the RF transceiver. Accordingly, the voltage of the analog detection signal may represent the proximity detected antennas.

**Table-1:**

| **Bit Configuration** | **Proximity Detection** | | |
|---|---|---|---|
| | **Sensor 3** | **Sensor 2** | **Sensor 1** |
| 000 | Not Detected | Not Detected | Not Detected |
| 001 | Not Detected | Not Detected | Detected |
| 010 | Not Detected | Detected | Not Detected |
| 011 | Not Detected | Detected | Detected |
| 100 | Detected | Not Detected | Not Detected |
| 101 | Detected | Not Detected | Detected |
| 110 | Detected | Detected | Not Detected |
| 111 | Detected | Detected | Detected |

The RF transceiver 1001 may further include an analog to digital converter (ADC) 1003 coupled to the RF Tx controller 1029. The RF Tx controller 1029 may be configured to apply the BO to the Tx paths 1025a-c individually. The RF Tx controller 1029 may adjust the TX power of the antennas 1022a-c coupled to the Tx paths 1025a-c individually based on the analog detection signal received from the controller 1040. The ADC 1003 may convert received analog detection signal into a digital detection signal (e.g. corresponding bit configuration provided in the exemplary controller look up table 1042 above), and accordingly the RF Tx controller 1029 may determine proximity detected antennas and apply the BO for the proximity detected antennas to the respective Tx paths, while maintaining Tx operation without applying a BO to other antennas of the plurality of antennas 1022a-c. The RF Tx controller 1029 may determine one or more Tx paths from the plurality of Tx paths to which a BO is to be applied based on the digital detection signal.

In various examples, the RF transceiver 1001 may include a memory to store an RF Tx look up table 1028. The RF Tx look up table 1028 may include information used to map received digital detection signal to the proximity detected antennas. An exemplary look up table is provided below, as table-2, for the RF Tx controller 1029 to control the RF circuit 1020 coupled to three antennas 1022a-c, each antenna corresponding to the one of three sensors, analogous to Table-1.

**Table-2:**

| **Bit Configuration** | **Power Back-off** | | |
|---|---|---|---|
| | **ANT3** | **ANT2** | **ANT1** |
| 000 | No BO | No BO | No BO |
| 001 | No BO | No BO | Apply BO |
| 010 | No BO | Apply BO | No BO |
| 011 | No BO | Apply BO | Apply BO |
| 100 | Apply BO | No BO | No BO |
| 101 | Apply BO | No BO | Apply BO |
| 110 | Apply BO | Apply BO | No BO |
| 111 | Apply BO | Apply BO | Apply BO |

Referring to Table-2, the RF Tx controller 1029 may obtain the digital detection signal from the output of the ADC 1003, which the digital detection signal may carry one of the provided bit configurations. Based on the received digital detection signal and the RF Tx look up table 1028, the RF Tx controller 1029 may determine the proximity detected antennas (i.e. the one or more antennas for which a BO is to be applied), and the RF Tx controller 1029 may apply the BO to one or more TX paths 1025a-c corresponding to the proximity detected antennas.

Referring to Table-1 and Table-2 collectively, with an intention to illustrate the operation, assuming that the controller 1040 has received proximity sensor information representing that proximity sensor 1 and proximity sensor 2 have detected a human body part presence, which the sensors corresponding to antenna 1 and antenna 2 respectively, the controller processor 1041 may output bits "011" to the DAC 1043 that provides an analog detection signal corresponding to "011". The ADC 1003 may receive the analog detection signal and it may convert the received analog detection signal into bits "011". The RF Tx controller 1029 may receive the bits "011" accordingly, and determine to apply BO for antenna 1 and antenna 2. The RF TX controller 1029 may apply the BO to respective Tx paths coupled to the antenna 1 and antenna 2, in which the RF Tx controller 1029 may cause the Tx power of the respective antenna 1 and antenna 2 to be reduced. The RF Tx controller 1029 may control one or more amplifiers within the respective Tx paths coupled to the antenna 1 and antenna 2 to adjust the Tx power of the antenna 1 and antenna 2. Meanwhile, antenna 3 may perform transmission operations without application of the BO (i.e. The RF Tx controller does not adjust the Tx power 1029).

In some aspects, the controller 1040 may include a combined look up table which includes information of the controller look up table 1042 and the RF Tx look up table 1028. In such an example, the controller 1040 may perform the determination operations of antennas from decoded proximity sensor information, which may simplify RF Tx operations. In other words, the controller look up table 1042 may include information to map decoded proximity sensor information directly to the proximity detected antennas. Accordingly, the RF Tx controller 1029 may be implemented by a circuit configured to control adjustment of Tx power of the antennas 1022a-c individually. Additionally, or alternatively, the RF transceiver 1001 may include the combined look up table. An exemplary combined look up table may be provided as below:

**Table 3:**

| **Bit Config** | **Proximity Detection** | | | **Power Back-off** | | |
|---|---|---|---|---|---|---|
| | **Sensor 3** | **Sensor 2** | **Sensor 1** | **ANT3** | **ANT2** | **ANT1** |
| 000 | Not Detected | Not Detected | Not Detected | No BO | No BO | No BO |
| 001 | Not Detected | Not Detected | Detected | No BO | No BO | Apply BO |
| 010 | Not Detected | Detected | Not Detected | No BO | Apply BO | No BO |
| 011 | Not Detected | Detected | Detected | No BO | Apply BO | Apply BO |
| 100 | Detected | Not Detected | Not Detected | Apply BO | No BO | No BO |
| 101 | Detected | Not Detected | Detected | Apply BO | No BO | Apply BO |
| 110 | Detected | Detected | Not Detected | Apply BO | Apply BO | No BO |
| 111 | Detected | Detected | Detected | Apply BO | Apply BO | Apply BO |

It is to be recognized that detection signal as an analog signal may be susceptible to noise, it may be recommended to guard the trace by following proper layout guidelines. These guidelines must be followed on both the apparatus 1000 and the RF transceiver 1001. Analog voltage on the ADC lines may be selected with adequate voltage margin between subsequent steps to avoid error. It is further to be noted that above provided tables for look up tables can be scaled for 'n' number of TX antennas, provided the resolution of the ADC and DAC are selected to adequate value, such for 8 TX antennas, ADC and DAC should of greater than or equal to 8 bits. Furthermore, based on the instantaneous combination of the proximity detection, the controller 1040 may generate an analog voltage using a DAC circuit and communicate the analog detection signal to the RF transceiver 1001 via the designated pin (e.g. DPR pin). Upon receiving the analog detection signal, the RF transceiver 1001 may immediately perform A/D conversion. The RF transceiver 1001 may utilize the RF Tx look-up table 1028 and identify the combination of antennas which have proximity and the RF Tx controller 1029 may apply BO accordingly as per the RF Tx look-up table 1028.

The RF Tx controller 1029 may be coupled to the RF circuit 1020 to apply the BO individually to each transmission path 1025a-c. In particular, the RF Tx controller 1029 may be coupled to each transmission path 1025a-c to monitor the signal power reflected from the antennas 1022a-c respectively.

In various aspects, each transmission path 1025a-c may include an amplifier configured to amplify communication signals conveyed via the respective transmission path 1025a-c. The amplifier may be a power amplifier, or a variable gain amplifier such as a driver amplifier configured to amplify communication signals before amplification of the power amplifier in the respective transmission path 1025a-c. Application of the BO may include reducing the gain that is set at the respective amplifier to reduce the Tx power. In various aspects, the amplifier may be configured to operate in a first configuration in which the amplifier amplifies the communication signals based on a gain set by a TPC circuit. The amplifier may be further configured to operate in a second configuration in which the amplifier amplifies the communication signals based on a predefined gain that is substantially lower than the gain set by the TPC circuit, and in various aspects the predefined gain may be a zero gain or a gain smaller than 1. The application of the BO may include switching the configuration of the amplifier to the second configuration in which the amplifier may provide no amplification. In various examples, the second configuration may include powering down or turning off the amplifier.

FIG. 11 shows an example of an apparatus for a radio communication device. The apparatus 1100 may include an RF transceiver (e.g. the RF transceiver 500) 1101 that may include a processor 1110 (e.g. the processor 510) configured to provide/receive communication signals via a plurality of paths 1125a-c (e.g. paths 525a-d) to/from an RF circuit 1120 (e.g. the RF circuit 520). The RF circuit 1120 may include RF-chains (e.g. RF-chains 321a-d) to provide RF processing respectively for the paths 1125a-c to communicate via a plurality of antennas (e.g. antennas 512a-d) respectively. The RF transceiver 1101 may further include an RF Tx controller 1129 (e.g. the controller 529) configured to control BO operation, a first interface 1102 (e.g. the first interface 502) configured to communicate with a main processor and a main memory of the radio communication device. The RF transceiver 1101 may further include an RF Tx interface circuit 1113 (e.g. the second interface 503) that is coupled to the RF Tx controller 1129, which the RF Tx interface circuit 1113 may be designated to receive signals related to detection of human presence. In this illustrative example, the RF Tx interface circuit 1113 is depicted as an I2C (I²C) circuit 1113 configured to communicate over an I2C bus 1133. The RF Tx controller 1129 may be configured to apply the BO based on signals received from the RF Tx interface circuit. In this illustrated example, the processor 1110 includes the RF Tx controller 1129. Alternatively, the RF Tx controller 1129 may be a separate entity in the RF transceiver 1101. In some examples, the RF Tx controller 1129 may be a processing circuitry external to the processor 1110.

In accordance with various aspects of this disclosure, the apparatus 1100 may include a controller 1140, such as an embedded controller, configured to trigger the BO operation based on the output of a proximity sensor. The controller 1140 may be configured to communicate with the proximity sensor to receive sensor information representative of outcome of monitoring of the proximity sensor. An exemplary proximity sensor is provided in accordance with FIG. 5, of which the details may be found if needed. The proximity sensor may be configured to provide proximity sensor information (e.g. sensor circuit information). The proximity sensor information may indicate, or represent, monitoring of a plurality of sensing elements of the proximity sensor (e.g. measurements), an output information of a sensor circuit representing one or more sensing elements from a plurality of sensing elements that have detected a presence, or proximity detected antennas.

The proximity detected antennas may include one or more antennas of the plurality of antennas, for which the proximity sensor has detected an object within the vicinity (e.g. an object is detected in Tx direction of the one or more antennas). In various examples, the proximity sensor may be configured to detect human presence, and accordingly, the proximity detected antennas may include one or more antennas, for which the proximity sensor has detected a human presence respectively.

The controller 1140 may include a controller processor 1141, a memory to store a look up table ("controller look up table") 1142, and a controller interface circuit 1143. In this illustrative example, the controller interface circuit 1143 is depicted as an I2C circuit 1143 configured to communicate with at least the RF transceiver 1101 over the I2C bus 1133. The controller 1140 may be configured to generate detection signal representing the proximity detected antennas. The controller processor 1141 may be configured to obtain the proximity sensor information and provide an output representative of the proximity detected antennas and the DAC 1143 may convert the provided output into an analog detection signal.

It may be desirable to employ such a designated controller to ensure that BO is applied, for example when the main processor of the radio communication device may operate in a low power mode or may be unresponsive for various reasons, or the operating system (OS) may be in an unresponsive state, or may have crashed. It may be desirable to operate and maintain BO to ensure that SAR limitations designated for the radio communication device is applied in those cases and provide prevention of long exposure of RF signals to a human body part, in which the main processor is unable to provide information to trigger the BO operation.

In particular in order to maintain communication over the I2C bus 1133, the controller 1140 may be configured to operate as an I2C master, as in entity configured to control communication operations over the I2C bus 1133. Accordingly, the controller interface circuit 1143 may include two output pins, one output pin may be configured to provide a clock signal and one output pin may be configured to communicate data. In these aspects, the RF transceiver 1101 may be configured to operate as an I2C slave for the I2C bus 1133. In some aspects, the proximity sensor may further include an I2C circuit, and the proximity sensor may be configured to operate as an I2C slave connected to the I2C bus 1133. The controller 1140 may receive proximity sensor information over the I2C bus 1133 from the proximity sensor.

For example, the proximity sensor information may include information representing one or more sensing elements from a plurality of sensing elements that have detected a presence (e.g. triggered sensing elements). The controller processor 1141 may decode received proximity sensor information. The controller processor 1141 may further encode information based on the decoded proximity sensor information indicating the proximity detected antennas and the controller interface circuit 1143 may generate the detection signal (e.g. I2C data) to be sent to the RF transceiver 1101 over the I2C bus 1133.

The RF transceiver 1101 may receive the detection signal via the RF Tx interface circuit 1103 and the RF Tx controller 1129 may determine one or more antennas from the plurality of antennas to which a BO is to be applied individually based on the decoded detection signal. The RF Tx controller 1129 may be configured to apply the BO to respective Tx paths 1125a-c connected to the one or more antennas individually. The RF Tx controller 1129 may adjust the TX power of the one or more antennas coupled to the Tx paths 1125a-c individually based on the decoded detection signal received from the controller 1140. Based on the decoded detection signal, the RF Tx controller 1129 may determine proximity detected antennas and apply the BO for the proximity detected antennas to the respective Tx paths, while maintaining Tx operation without applying a BO to other antennas of the plurality of antennas . The RF Tx controller 1129 may determine one or more Tx paths from the plurality of Tx paths to which a BO is to be applied based on the digital detection signal.

It is to be recognized that, the detection signal provided by the controller 1140 may include an interrupt data which the controller 1140 may communicate to the RF transceiver 1101 over the I2C bus 1133 or an existing I2C bus that may not be controlled by the controller 1140. On the other hand, provided that controller may operate as the I2C master and the RF transceiver 1101 may operate as the slave, upon receiving I2C data carried with the detection signal, the RF Tx controller 1129 may identify the combination of antennas which have proximity based on a look up table, similar to look up tables provided with respect to FIG. 11, and apply BO accordingly.

The RF Tx controller 1129 may be coupled to the RF circuit 1120 to apply the BO individually to each transmission path 1125a-c. In particular, the RF Tx controller 1129 may be coupled to each transmission path 1125a-c to monitor the signal power reflected from the antennas respectively.

In various aspects, each transmission path 1125a-c may include an amplifier configured to amplify communication signals conveyed via the respective transmission path 1125a-c. The amplifier may be a power amplifier, or a variable gain amplifier such as a driver amplifier configured to amplify communication signals before amplification of the power amplifier in the respective transmission path 1125a-c. Application of the BO may include reducing the gain that is set at the respective amplifier to reduce the Tx power. In various aspects, the amplifier may be configured to operate in a first configuration in which the amplifier amplifies the communication signals based on a gain set by a TPC circuit. The amplifier may be further configured to operate in a second configuration in which the amplifier amplifies the communication signals based on a predefined gain that is substantially lower than the gain set by the TPC circuit, and in various aspects the predefined gain may be a zero gain or a gain smaller than 1. The application of the BO may include switching the configuration of the amplifier to the second configuration in which the amplifier may provide no amplification. In various examples, the second configuration may include powering down or turning off the amplifier.

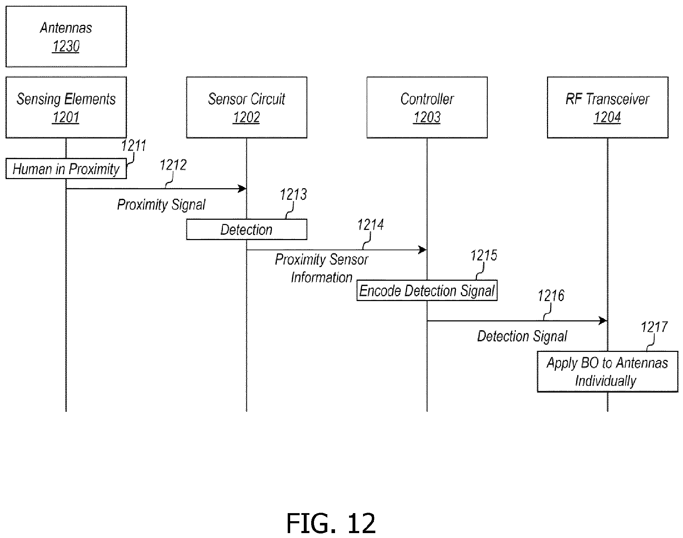

FIG. 12 shows an exemplary signaling procedure between sensing elements, a sensor circuit, a controller, and an RF transceiver, which may be entities provided in this disclosure, in particular with respect to FIG. 5 or other figures referring to entities of FIG. 5. Sensing elements 1201 may be configured to detect objects within the vicinities (e.g. Tx direction) of antennas 1230. RF transceiver 1204 may be configured to control Tx power of each of the antennas 1230 individually.

When there is an object (e.g. a human body part) is located 1211 within the monitoring area of the sensing elements 1201 respectively, the sensing elements 1211 may provide an indication to the sensor circuit 1211 via a proximity signal 1212. In some examples, the indication may be encoded within a message that is triggered by a detection. In some examples, the proximity signal 1212 may carry information about measurements of the sensing elements 1211 within their respective monitoring areas. For example, the sensing elements 1211 may, in response to a detection (e.g. change at measurements), send the proximity signal 1212 which may include changes at capacitance measurements.

The sensor circuit 1202 may determine 1213 that there is an object (e.g. a human) detected by at least some of the sensing elements 1201. Based on its operations, the sensor circuit 1202 may notify the controller 1203 via proximity sensor information 1214 indicating one or more sensing elements of the sensing elements 1201 that have detected the presence. In various examples, the proximity sensor information 1214 may include an identifier for the respective one or more sensing elements that have detected the presence (e.g. for a case in which sensor 1 and sensor 4 have detected a presence, an identifier of sensor 1 and sensor 4). Exemplarily, the sensor circuit 1202 may communicate the proximity sensor information 1214 via an I2C interface or via a designated GPIO pin.

The controller 1203 may, in response to receiving proximity sensor information, decode the proximity sensor information and determine one or more antennas from the antennas 1230 corresponding to triggered detection of the one or more sensing elements indicated by the decoded proximity sensor information. The controller 1203 may determine the one or more antennas based on a look up table stored in a memory (e.g. for a case in which proximity sensor information indicates sensor 1 and sensor 4 have detected a presence, the controller 1203 may determine antenna 1 and antenna 4 are proximity detected antennas). In some examples, there may be a plurality of sensor circuits 1202 coupled to a plurality of sensing elements 1201. In such an implementation, the controller 1203 may communicate with each sensor circuit 1202 over a designated interface (e.g. a GPIO pin) to receive proximity sensor information from the plurality of sensor circuits 1202.

The controller 1203 may be a component configured to interface between the sensor circuit 1202 and the RF transceiver 1204. Accordingly, the controller 1203 may encode 1215 detection signal representing the proximity detected antennas and send the encoded detection signal 1216 to the RF transceiver. As provided in various examples within this disclosure, the encoded detection signal 1216 may include an analog detection signal, or a detection signal including a message (e.g. an I2C data), which represents the proximity detected antennas.

The RF transceiver 1204 may, in response to receiving the detection signal 1216, decode the received detection signal and identify the proximity detected antennas based on the received detection signal. The RF transceiver 1204 may further identify respective Tx paths coupled to the proximity detected antennas. The RF transceiver 1204 may accordingly apply the BO operation to the respective TX paths coupled to the proximity detected antennas. Accordingly, the RF transceiver 1204 may adjust the Tx power of the proximity detected antennas. In various examples, the RF transceiver 1204 may apply a predefined BO configuration for each antenna of the proximity detected antennas individually based on a look up table representing the BO configuration (e.g. a Tx power output value, a Tx RF signal amplitude, a power configuration of an amplifier).

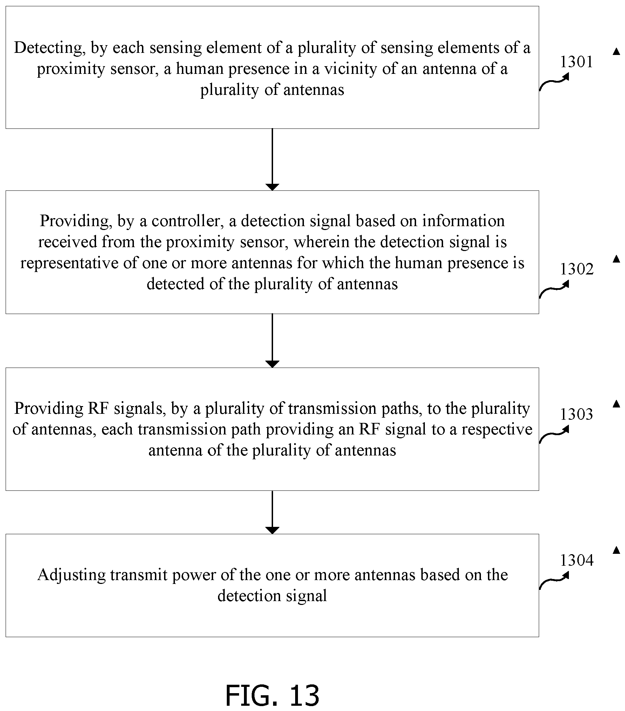

FIG. 13 shows an example of a method. The method may include detecting 1301, by each sensing element of a plurality of sensing elements of a proximity sensor, a human presence in a vicinity of an antenna of a plurality of antennas, providing 1302, by a controller, a detection signal based on information received from the proximity sensor, wherein the detection signal is representative of one or more antennas for which the human presence is detected of the plurality of antennas, providing 1303 RF signals, by a plurality of transmission paths, to the plurality of antennas, each transmission path providing an RF signal to a respective antenna of the plurality of antennas, and adjusting 1304 transmit power of the one or more antennas based on the detection signal.

The following examples pertain to further aspects of this disclosure.

In example 1A, the subject matter includes an RF transmitter that may include: an interface configured to receive a signal representative of a detected presence by a proximity sensor configured to detect a presence in a vicinity of a plurality of antennas; a plurality of transmission paths, each transmission path is configured to provide an RF signal to a respective antenna of the plurality of antennas; a processing circuitry configured to: detect, responsive to a received signal representative of the detected presence, a change at a signal power reflected at each transmission path; adjust transmit power of each antenna of at least one of the antennas based on a detected change at the respective transmission path.

In example 2A, the subject matter of example 1A, can optionally include that the processing circuitry is further configured to monitor, responsive to the received signal representative of the detected presence, the change at each reflected signal power for a predefined period of time. In example 3A, the subject matter of example 1A or example 2A, can optionally include that the processing circuitry is further configured to detect the change at the signal power reflected at each transmission path according to a detected voltage standing-wave ratio of the respective antenna. In example 4A, the subject matter of any one of examples 1A to 3A, can optionally include that the processing circuitry is further configured to adjust the transmit power for at least one of the antennas based on a predefined back-off configuration.

In example 5A, the subject matter of any one of examples 1A to 4A, can optionally include that the processing circuitry is further configured to determine the each antenna of the at least one of the antennas based on a comparison between the detected change at each transmission path and a predefined change threshold. In example 6A, the subject matter of any one of examples 1A to 5A, can optionally include that the processing circuitry is further configured to adjust the transmit power of each antenna of the at least one of the antennas based on the detected change at the respective transmission path and a look up table. In example 7A, the subject matter of example 6A, can optionally include that the processing circuitry is further configured to determine a transmit power configuration to adjust the transmit power based on the look up table may include a plurality of values, each value is representative of a transmit power for an antenna for one or more RF bands.

In example 8A, the subject matter of any one of examples 1A to 7A, can optionally include that each transmission path includes an amplifier configured to amplify a received communication signal to obtain the respective RF signal; can optionally include that the processing circuitry is further configured to control a gain of each amplifier based on the detected change at the respective transmission path. In example 9A, the subject matter of example 8A, can optionally include that the amplifier includes a first operation mode in which the amplifier is configured to amplify the received communication signal with a first gain; can optionally include that the amplifier includes a second operation mode in which the amplifier is configured to amplify the received communication signal with a second gain that is smaller than the first gain.

In example 10A, the subject matter of any one of claims 1A to 9A, can optionally include that the processing circuitry further includes at least one comparator configured to compare the signal reflected at each transmission path and a reference signal. In example 11A, the subject matter of any one of claims 1A to 10A, can optionally include that the processing circuitry includes for each transmission path: a coupler coupled to a respective transmission path to receive a reflected RF signal; an analog-to-digital converter configured to convert the reflected RF signal to a digital output; a digital comparator configured to compare the digital output with a reference value. In example 12A, the subject matter of example 11A, can optionally include that the processing circuitry further includes for each transmission path a control logic coupled to an output of a respective digital comparator of the respective transmission path, can optionally include that the control logic is configured to determine a transmit power based on the output of the respective digital comparator and a look up table.

In example 13A, the subject matter of example 12A, can optionally include that the processing circuitry further includes for each transmission path a driver amplifier coupled to a respective control logic of the respective transmission path, can optionally include that the driver amplifier is configured to provide an output to drive the amplifier of the respective transmission path based on determined transmit power. In example 14A, the subject matter of any one of claims 1A to 13A, further may include a controller coupled to the interface, can optionally include that the controller is configured to provide the signal representative of the detected presence by the proximity sensor. In example 15A, the subject matter of example 14A, can optionally include that the controller is configured to receive a proximity signal from the proximity sensor and generate the signal representative of the detected presence by the proximity sensor based on received proximity signal. In example 16A, the subject matter of example 14A or example 15A, can optionally include that the interface includes a dynamic power reduction pin.

In example 17A, the subject matter of any one of examples 14A to 16A, can optionally include that the controller is configured to generate an interrupt signal based on a received presence signal provided by the proximity sensor; can optionally include that the controller is configured to output a generated interrupt signal as the signal representative of the detected presence. In example 18A, the subject matter of any one of claims 1A to 17A, can optionally include that each detected change is caused by a detuning of the respective antenna. In example 19A, the subject matter of any one of claims 1A to 18A, can optionally include that the received signal representative of the detected presence is representative of a detected human presence.

In example 20A, the subject matter of any one of claims 1A to 19A, further may include a transmit power controller configured to control the transmit power of each antenna of the plurality of antennas independently. In example 21A, the subject matter of any one of claims 1A to 20A, further may include the proximity sensor configured to detect presence of the object in the vicinity of the plurality of antennas. In example 22A, the subject matter of any one of claims 1A to 21A, can optionally include that the proximity sensor is configured to detect human presence in the vicinity of the plurality of antennas. In example 23A, the subject matter of any one of claims 1A to 22A, can optionally include that the RF transmitter includes a modem configured to output baseband signals to the plurality of transmission paths.

In example 24A, a communication device may include a housing may include: a plurality of antennas; a plurality of sensing elements configured to detect a presence in the vicinity of the plurality of antennas, and the RF transmitter of any one of examples 1A to 23A.

In example 25A, the subject matter includes a method that may include: receiving, by an interface, a signal representative of a detected presence by a proximity sensor configured to detect a presence in a vicinity of a plurality of antennas; providing RF signals, by a plurality of transmission paths, to the plurality of antennas, each transmission path providing an RF signal to a respective antenna of the plurality of antennas; detecting, responsive to a received signal representative of the detected presence, a change at a signal power reflected at each transmission path; adjusting transmit power of each antenna of at least one of the antennas based on a detected change at the respective transmission path.

In example 26A, the subject matter of example 25A, further may include: monitoring, responsive to the received signal representative of the detected presence, the change at each reflected signal power for a predefined period of time. In example 27A, the subject matter of example 25A or example 26A, further may include: detecting the change at the signal power reflected at each transmission path according to a detected voltage standing-wave ratio of the respective antenna. In example 28A, the subject matter of any one of examples 25A to 27A, further may include: adjusting the transmit power for at least one of the antennas based on a predefined back-off configuration. In example 29A, the subject matter of any one of examples 25A to 28A, further may include: determining the each antenna of the at least one of the antennas based on a comparison between the detected change at each transmission path and a predefined change threshold.

In example 30A, the subject matter of any one of examples 25A to 29A, further may include: adjusting the transmit power of each antenna of the at least one of the antennas based on the detected change at the respective transmission path and a look up table. In example 31A, the subject matter of example 30A, further may include: determining a transmit power configuration to adjust the transmit power based on the look up table may include a plurality of values, each value is representative of a transmit power for an antenna for one or more RF bands. In example 32A, the subject matter of any one of examples 25A to 31A, can optionally include that each transmission path includes an amplifier configured to amplify a received communication signal to obtain the respective RF signal; can optionally include that the method further includes controlling a gain of each amplifier based on the detected change at the respective transmission path. In example 33A, the subject matter of example 32A, further may include: can optionally include that the amplifier includes a first operation mode in which the amplifier is configured to amplify the received communication signal with a first gain; can optionally include that the amplifier includes a second operation mode in which the amplifier is configured to amplify the received communication signal with a second gain that is smaller than the first gain.

In example 34A, the subject matter of any one of examples 25A to 33A, further may include: comparing the signal reflected at each transmission path and a reference signal. In example 35A, the subject matter of any one of examples 25A to 34A, further may include providing, by a controller, the signal representative of the detected presence by the proximity sensor. In example 36A, the subject matter of example 35A, further may include: receiving, by the controller, a proximity signal from the proximity sensor and generating the signal representative of the detected presence by the proximity sensor based on received proximity signal. In example 37A, the subject matter of example 35A or example 36A, can optionally include that the interface includes a dynamic power reduction pin. In example 38A, the subject matter of any one of examples 35A to 37A, further may include: generating, by the controller, an interrupt signal based on a received presence signal provided by the proximity sensor; outputting, by the controller, a generated interrupt signal as the signal representative of the detected presence.

In example 39A, the subject matter of any one of examples 25A to 38A, can optionally include that each detected change is caused by a detuning of the respective antenna. In example 40A, the subject matter of any one of examples 25A to 39A, can optionally include that the received signal representative of the detected presence is representative of a detected human presence.

In example 41A, a non-transitory computer readable medium may include one or more instructions which, if executed by a processor, cause the processor to: receive, from a predefined interface, a signal representative of a detected presence by a proximity sensor configured to detect a presence in a vicinity of a plurality of antennas detect, responsive to a received signal representative of the detected presence, a change at a signal power reflected at each transmission path of a plurality of transmission paths used to provide RF signals to the plurality of antennas; adjust transmit power of each antenna of at least one of the antennas based on a detected change at the respective transmission path. In example 42A, a non-transitory computer readable medium may include one or more instructions which, if executed by a processor, cause the processor to perform the method according to any one of examples 25A to 40A.

In example 43A, an RF circuit may include: an interface configured to receive a signal representative of a detected human presence in a vicinity of a plurality of antennas; a plurality of transmission paths, each transmission path is configured to output an RF signal to a respective antenna of a plurality of antennas, each antenna is configured to transmit the respective RF signal based on a predetermined transmit power; a processing circuitry configured to initiate a back-off power operation mode in response to a received signal representative of the detected human presence, in which the processing circuitry is configured to: detect a change at a power of a signal reflected from each antenna of the plurality of antennas; adjust the respective predetermined transmit power of each antenna based on a detected change at the power of the respective signal from the respective antenna. In example 44A, The RF circuit of example 43, can optionally include that the RF circuit is further configured to perform any one of the operations provided in this disclosure, in particular the operations in accordance with examples 1A to 24A.

In example 1B, the subject matter includes an apparatus that may include: a proximity sensor may include a plurality of sensing elements, each sensing element is configured to detect a human presence in a vicinity of a respective antenna of a plurality of antennas; a controller configured to provide a detection signal based on information received from the proximity sensor, wherein the detection signal is representative of one or more antennas for which the human presence is detected of the plurality of antennas; an RF transmitter may include: a plurality of transmission paths, each transmission path is configured to provide an RF signal to a respective antenna of the plurality of antennas; a processing circuitry coupled to the controller and configured to adjust transmit power of the one or more antennas based on the detection signal.

In example 2B, the subject matter of example 1B, can optionally include that the processing circuitry is further configured to adjust the transmit power of each antenna of the one or more antennas based on a predefined back-off power configuration. In example 3B, the subject matter of example 1B or example 2B, can optionally include that the processing circuitry is further configured to adjust the transmit power of each antenna of the one or more antennas based on the detection signal and a look up table. In example 4B, the subject matter of example 3B, can optionally include that the look up table includes information representative of a plurality of predefined detections signals, each predefined detection signal is associated with one or more antennas that are subject to a transmit power adjustment of the plurality of antennas.

In example 5B, the subject matter of example 3B or example 4B, can optionally include that the processing circuitry is further configured to identify the one or more antennas based on the detection signal and the look up table. In example 6B, the subject matter of any one of examples 1B to 5B, can optionally include that each transmission path includes an amplifier configured to amplify a received communication signal to obtain the respective RF signal; can optionally include that the processing circuitry is further configured to control a gain of each amplifier based on the detection signal. In example 7B, the subject matter of example 6B, can optionally include that the amplifier includes a first operation mode in which the amplifier is configured to amplify the received communication signal with a first gain; can optionally include that the amplifier includes a second operation mode in which the amplifier is configured to amplify the received communication signal with a second gain that is smaller than the first gain. In example 8B, the subject matter of example 7B, can optionally include that the processing circuitry is configured to set gains of one or more respective amplifiers coupled to the one or more antennas to the second gain. In example 9B, the subject matter of any one of examples 1B to 8B, can optionally include that the RF transmitter includes an interface coupled to the controller to receive the detection signal; can optionally include that the interface includes a dynamic power reduction pin.

In example 10B, the subject matter of any one of examples 1B to 9, can optionally include that the controller is configured to generate the detection signal based on the information received from the proximity sensor and a predefined look up table for the controller. In example 11B, the subject matter of any one of examples 1B to 10B, can optionally include that the RF transmitter includes a memory configured to store the predefined look up table for the controller; can optionally include that the processing circuitry is further configured to communicate with the RF transmitter to configure the controller. In example 12B, the subject matter of any one of examples 1B to 11B, can optionally include that the controller includes a controller processing circuitry configured to decode information received from the proximity sensor to obtain sensor information representative of triggered sensing elements which have detected a human presence; can optionally include that the controller is configured to determine the one or more antennas based on the sensor information and the look up table for the controller.

In example 13B, the subject matter of example 12B, can optionally include that the controller includes a digital to analog converter (DAC) configured to output an analog detection signal representative of the determined one or more antennas. In example 14B, the subject matter of example 13B, can optionally include that the voltage of the analog detection signal is representative of the determined one or more antennas. In example 15B, the subject matter of example 13B or example 14B, can optionally include that the RF transmitter includes an analog to digital converter (ADC) coupled to the output of the DAC of the controller; can optionally include that the processing circuitry is configured to obtain the detection signal from the output of the ADC. In example 16B, the subject matter of example 15B, can optionally include that the processing circuitry is configured to determine the one or more antennas of which respective transmit powers are to be adjusted based on the output of the ADC and a predefined look up table for the RF transmitter.

In example 17B, the subject matter of example 16B, can optionally include that the predefined look up table for the RF transmitter includes a plurality of predefined ADC outputs and each predefined ADC output is associated with one or more antennas that are subject to a transmit power adjustment of the plurality of antennas. In example 18B, the subject matter of any one of examples 1B to 11B, can optionally include that the controller processing circuitry is further configured to encode a message including information representative of the determined one or more antennas; can optionally include that the provided detection signal includes the encoded message.

In example 19B, the subject matter of example 18B, can optionally include that the processing circuitry is further configured to decode the encoded message received from the controller; can optionally include that the processing circuitry is further configured to identify the one or more antennas based on the decoded message. In example 20B, the subject matter of any one of examples 1B to 19B, may further include a transmit power controller configured to control the transmit power of each antenna of the plurality of antennas independently. In example 21B, the subject matter of any one of examples 1B to 20B, can optionally include that the RF transmitter includes a modem configured to output baseband signals to the plurality of transmission paths.

In example 22B, a communication device may include: the apparatus of any one of examples 1B to 21B; a housing may include the plurality of antennas and the plurality of sensing elements; a main processor.

In example 23B, the subject matter includes a method that may include: detecting, by each sensing element of a plurality of sensing elements of a proximity sensor, a human presence in a vicinity of an antenna of a plurality of antennas; providing, by a controller, a detection signal based on information received from the proximity sensor, can optionally include that the detection signal is representative of one or more antennas for which the human presence is detected of the plurality of antennas; providing RF signals, by a plurality of transmission paths of an RF transmitter, to the plurality of antennas, each transmission path providing an RF signal to a respective antenna of the plurality of antennas; adjusting transmit power of the one or more antennas based on the detection signal.

In example 24B, the subject matter of example 23B, may further include: adjusting the transmit power of each antenna of the one or more antennas based on a predefined back-off power configuration. In example 25B, the subject matter of example 23B or example 24B, may further include: adjusting the transmit power of each antenna of the one or more antennas based on the detection signal and a look up table. In example 26B, the subject matter of example 25B, can optionally include that the look up table includes information representative of a plurality of predefined detections signals, each predefined detection signal is associated with one or more antennas that are subject to a transmit power adjustment of the plurality of antennas.

In example 27B, the subject matter of example 25B or example 26B, may further include: identifying the one or more antennas based on the detection signal and the look up table. In example 28B, the subject matter of any one of examples 23B to 27B, can optionally include that each transmission path includes an amplifier configured to amplify a received communication signal to obtain the respective RF signal; can optionally include that the method further includes controlling a gain of each amplifier based on the detection signal. In example 29B, the subject matter of example 28B, can optionally include that the amplifier includes a first operation mode in which the amplifier is configured to amplify the received communication signal with a first gain; can optionally include that the amplifier includes a second operation mode in which the amplifier is configured to amplify the received communication signal with a second gain that is smaller than the first gain.

In example 30B, the subject matter of example 29B, may further include: setting gains of one or more respective amplifiers coupled to the one or more antennas to the second gain. In example 31B, the subject matter of any one of examples 23B to 30B, can optionally include that the RF transmitter includes an interface coupled to the controller to receive the detection signal; can optionally include that the interface includes a dynamic power reduction pin. In example 32B, the subject matter of any one of examples 23B to 31B, may further include: generating the detection signal based on the information received from the proximity sensor and a predefined look up table for the controller. In example 33B, the subject matter of any one of examples 23B to 32B, can optionally include that the RF transmitter includes a memory configured to store the predefined look up table for the controller; can optionally include that the method further includes communicating with the RF transmitter to configure the controller.

In example 34B, the subject matter of any one of examples 23B to 33B, decoding information, by a controller processor, received from the proximity sensor to obtain sensor information representative of triggered sensing elements which have detected a human presence; determining, by the controller processor, the one or more antennas based on the sensor information and the look up table for the controller. In example 35B, the subject matter of example 34B, may further include outputting an analog detection signal representative of the determined one or more antennas. In example 36B, the subject matter of example 13B, can optionally include that the voltage of the analog detection signal is representative of the determined one or more antennas. In example 37B, the subject matter of example 35B or example 36B, may further include: obtaining the detection signal from the output of the ADC coupled to the controller.

In example 38B, the subject matter of example 37B, further including: determining the one or more antennas of which respective transmit powers are to be adjusted based on the output of the ADC and a predefined look up table for the RF transmitter. In example 39B, the subject matter of example 38B, can optionally include that the predefined look up table for the RF transmitter includes a plurality of predefined ADC outputs and each predefined ADC output is associated with one or more antennas that are subject to a transmit power adjustment of the plurality of antennas. In example 40B, the subject matter of any one of examples 23B to 39B, may further include: encoding a message including information representative of the determined one or more antennas; can optionally include that the provided detection signal includes the encoded message. In example 41B, the subject matter of example 40B, decoding the encoded message received from the controller; identifying the one or more antennas based on the decoded message.

In example 42B, a non-transitory computer-readable medium may include one or more instructions which, if executed by a processor, cause the processor to: cause each sensing element of a plurality of sensing elements of a proximity sensor to detect a human presence in a vicinity of an antenna of a plurality of antennas; cause a controller to provide a detection signal based on information received from the proximity sensor, can optionally include that the detection signal is representative of one or more antennas for which the human presence is detected of the plurality of antennas; provide RF signals, by a plurality of transmission paths, to the plurality of antennas, each transmission path providing an RF signal to a respective antenna of the plurality of antennas; adjust transmit power of the one or more antennas based on the detection signal. In example 43B, a non-transitory computer-readable medium may include one or more instructions which, if executed by a processor, cause the processor to perform the method of any one of examples 23B to 41B.

In example 44B, an apparatus may include: a plurality of sensing elements, each sensing element is configured to detect a human presence in a vicinity of a respective antenna of a plurality of antennas; a control circuitry coupled to the plurality of sensing elements, can optionally include that the control circuitry is configured to generate detection information based on detection of human presence by the plurality sensing elements, can optionally include that the detection information is representative of one or more antennas of the plurality of antennas, at which the human presence is detected in the respective vicinity; an RF circuit may include: a plurality of transmission paths, each transmission path is configured to output an RF signal to a respective antenna of the plurality of antennas, each antenna is configured to transmit the respective RF signal based on a predetermined transmit power; a processing circuitry coupled to the control circuitry, and configured to adjust each predetermined transmit power of each antenna of the one or more antennas based on received detection signal. In example 45B, the subject matter of example 44B, can optionally include that the apparatus is further configured to perform any operations provided in this disclosure, in particular operations provided in accordance with any one of examples 1B to 22B.

The word "exemplary" is used herein to mean "serving as an example, instance, or illustration". Any aspect or design described herein as "exemplary" is not necessarily to be construed as preferred or advantageous over other aspects or designs.

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal that is "indicative of" or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" or "processing circuitry" as, for example, used herein may be understood as any kind of technological entity that allows handling of data. The data may be handled according to one or more specific functions executed by the processor or 9. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more."

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D Points, among others, or any combination thereof. Registers, shift registers, processor registers, data buffers, among others, are also embraced herein by the term memory. The term "software" refers to any type of executable instruction, including firmware.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

The term "antenna", as used herein, may include any suitable configuration, structure and/or arrangement of one or more antenna elements, components, units, assemblies and/or arrays. The antenna may implement transmit and receive functionalities using separate transmit and receive antenna elements. The antenna may implement transmit and receive functionalities using common and/or integrated transmit/receive elements. The antenna may include, for example, a phased array antenna, a single element antenna, a set of switched beam antennas, and/or the like.

It will be understood that when an element is referred to as being "connected" or "coupled" to another element, it can be physically connected or coupled to the other element such that current and/or electromagnetic radiation (e.g., a signal) can flow along a conductive path formed by the elements. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), Spatial Divisional Multiple Access (SDMA), Time-Division Multiplexing (TDM), Time-Division Multiple Access (TDMA), Multi-User MIMO (MU-MIMO), General Packet Radio Service (GPRS), extended GPRS (EGPRS), Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth (BT), Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other aspects may be used in various other devices, systems and/or networks.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN, and the like.

Some aspects may be used in conjunction with a wireless communication network communicating over a frequency band of 2.4GHz, 5GHz, and/or 6-7GHz. However, other aspects may be implemented utilizing any other suitable wireless communication frequency bands, for example, an Extremely High Frequency (EHF) band (the millimeter wave (mmWave) frequency band), e.g., a frequency band within the frequency band of between 20GHz and 300GHz, a WLAN frequency band, a WPAN frequency band, and the like.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. A radio frequency (RF) transmitter comprising:
an interface configured to receive a signal representative of a detected presence by a proximity sensor configured to detect a presence in a vicinity of a plurality of antennas;
a plurality of transmission paths, each transmission path is configured to provide an RF signal to a respective antenna of the plurality of antennas;
a processing circuitry configured to:
detect, responsive to a received signal representative of the detected presence, a change at a signal power reflected at each transmission path;
adjust transmit power of each antenna of at least one of the antennas based on a detected change at the respective transmission path.

2. The RF transmitter of claim 1,
wherein the processing circuitry is further configured to monitor, responsive to the received signal representative of the detected presence, the change at each reflected signal power for a predefined period of time.

3. The RF transmitter of claim 1 or claim 2,
wherein the processing circuitry is further configured to detect the change at the signal power reflected at each transmission path according to a detected voltage standing-wave ratio of the respective antenna.

4. The RF transmitter of any one of claims 1 to 3,
wherein the processing circuitry is further configured to adjust the transmit power for at least one of the antennas based on a back-off configuration.

5. The RF transmitter of any one of claims 1 to 4,
wherein the processing circuitry is further configured to determine the each antenna of the at least one of the antennas based on a comparison between the detected change at each transmission path and a change threshold.

6. The RF transmitter of any one of claims 1 to 5,
wherein the processing circuitry is further configured to adjust the transmit power of each antenna of the at least one of the antennas based on the detected change at the respective transmission path and a look up table.

7. The RF transmitter of claim 6,
wherein the processing circuitry is further configured to determine a transmit power configuration to adjust the transmit power based on the look up table comprising a plurality of configurations, each configuration is representative of a transmit power for an antenna for one or more RF bands.

8. The RF transmitter of any one of claims 1 to 7,
wherein each transmission path comprises an amplifier configured to amplify a received communication signal to obtain the respective RF signal;
wherein the processing circuitry is further configured to control a gain of each amplifier based on the detected change at the respective transmission path.

9. The RF transmitter of claim 8,
wherein the amplifier comprises a first operation mode in which the amplifier is configured to amplify the received communication signal with a first gain;
wherein the amplifier comprises a second operation mode in which the amplifier is configured to amplify the received communication signal with a second gain that is smaller than the first gain.

10. The RF transmitter of any one of claims 1 to 9,
wherein the processing circuitry comprises for each transmission path:
a coupler coupled to a respective transmission path to receive a reflected RF signal;
an analog-to-digital converter configured to convert the reflected RF signal to a digital output;
a digital comparator configured to compare the digital output with a reference value.

11. The RF transmitter of claim 10,
wherein the processing circuitry further comprises for each transmission path a control logic coupled to an output of a respective digital comparator of the respective transmission path, wherein the control logic is configured to determine a transmit power based on the output of the respective digital comparator and a look up table.

12. The RF transmitter of claim 11,
wherein the processing circuitry further comprises for each transmission path a driver amplifier coupled to a respective control logic of the respective transmission path, wherein the driver amplifier is configured to provide an output to drive the amplifier of the respective transmission path based on determined transmit power.

13. The RF transmitter of any one of claims 1 to 12,
further comprising a controller coupled to the interface, wherein the controller is configured to provide the signal representative of the detected presence by the proximity sensor.

14. A non-transitory computer readable medium comprising one or more instructions which, if executed by a processor, cause the processor to:
receive, from an interface, a signal representative of a detected presence by a proximity sensor configured to detect a presence in a vicinity of a plurality of antennas;
detect, responsive to a received signal representative of the detected presence, a change at a signal power reflected at each transmission path of a plurality of transmission paths used to provide RF signals to the plurality of antennas;
adjust transmit power of each antenna of at least one of the antennas based on a detected change at the respective transmission path.

15. The non-transitory computer readable medium of claim 14, wherein the one or more instructions further cause the processor to adjust the transmit power for at least one of the antennas based on a back-off configuration.
